# EUROPEAN PATENT APPLICATION

(11) **EP 4 431 846 A1**
(43) Date of publication of application: **18.09.2024**
(21) Application number: 22892881.8
(22) Date of filing: 10.11.2022
(51) Int. Cl.: F25D 3/00, C09K 5/06

(54) **COLD STORAGE MEDIUM COMPOSITION AND USE THEREOF**

(30) Priority: 11.11.2021 JP 2021184109; 14.12.2021 JP 2021202453; 08.07.2022 JP 2022110755
(71) Applicant: Kaneka Corporation, Osaka-shi, Osaka 530-8288 (JP)
(72) Inventor: KATANO, Chiaki, Settsu-shi, Osaka 566-0072 (JP); UEDA, Toru, Settsu-shi, Osaka 566-0072 (JP)
(74) Representative: Vossius & Partner Patentanwälte Rechtsanwälte mbB
(86) International application number: PCT/JP2022/041991
(87) International publication number: WO 2023/085383

(57) **Abstract**

It is an object to provide (i) a cold storage material composition allowing for temperature maintenance of a temperature control target article at a constant temperature for an extended period of time in various control temperature ranges in a range of -75.0°C to -66.0°C and having excellent easy handling and (ii) a technique for using the cold storage material composition. The object is attained by a cold storage material composition containing lithium ions and bromide ions in respective specific amounts, relative to 100 mol of water, the cold storage material composition having a melting temperature in a range of -75.0°C to -66.0°C.

## Description

### Technical Field

The present invention relates to (i) a cold storage material composition for controlling a temperature of an article and (ii) a technique for using the cold storage material composition. The present invention more specifically relates to a cold storage material composition, a cold storage material including the cold storage material composition, a transport container including the cold storage material, a method of producing the cold storage material composition, and a method of using the cold storage material composition.

### Background Art

Various heat storage material compositions or cold storage material compositions using latent heat have conventionally been known and have been used in a variety of fields including a heating and cooling system and storage and transportation of articles.

For example, some of pharmaceutical products, specimens, and the like used in medical facilities such as hospitals and the like and some of foods and the like available in supermarkets and the like need to be kept at a constant temperature in a given temperature range for a given period of time during transportation or storage so that their qualities are maintained.

Examples of a method of transporting or storing articles such as pharmaceutical products, medical devices, cells, specimens, organs, chemical substances, foods, and the like in a state in which the articles are kept at a constant temperature conventionally include the following method: That is, a method in which (i) a cold storage material, which has been frozen and solidified in advance, is placed in a container having a thermal insulation property to prepare a temperature keeping container and (ii) an article housed in the temperature keeping container is transported or stored in a state in which the temperature of the article is maintained by using latent heat of melting of the cold storage material. To maintain the above-described article to be kept at a constant temperature (hereinafter also referred to as "temperature control target article") in the given temperature (hereinafter also referred to as "control temperature") range for an extended period of time, a cold storage material having a melting temperature in the given temperature range is preferably used.

Some of the temperature control target articles need to be transported at control temperatures of -30°C or lower, preferably -50°C or lower, more preferably -66°C or lower, and other temperature. To meet these control temperatures, dry ice has conventionally been used as a cold storage material. Dry ice is inexpensive and versatile. However, dry ice has the problem of, for example, being treated as a hazardous material in a case of transportation, air transportation in particular, and being limited in the amount loaded when used as a cold storage material for use in a temperature keeping container (transport container). This is because dry ice expands in volume when sublimating (phase transition from a solid to a gas).

As a cold storage material that can be used in a low temperature range and does not involve phase transition to a gas, a cold storage material composition using an aqueous inorganic salt solution containing water and a specific inorganic salt has been disclosed.

For example, Patent Literature 1 discloses a cold storage material composition containing 6 mol of calcium chloride (5.6 mol% relative to the total molar quantity of the cold storage material composition) and 2 mol of sodium chloride (1.9 mol% relative to the total molar quantity of the cold storage material composition) relative to 100 mol of water, and containing, as a thickener, 1% by weight of high viscosity-type hydroxyethyl cellulose relative to the total weight of the cold storage material composition, the cold storage material composition having a melting temperature of -54.7°C.

Further, Patent Literature 2 discloses a refrigerant comprising water and a solute containing lithium chloride and sodium chloride, the lithium chloride being contained in the highest weight-based percentage among components of the solute.

### Citation List

### [Patent Literature]

[Patent Literature 1]
   International publication No. WO2016/204284
[Patent Literature 2]
   Japanese Patent Application Publication Tokukai No. 2017-128622

### Summary of Invention

### Technical Problem

Unfortunately, such a conventional cold storage material composition as described earlier still has room for improvement in terms of a melting temperature, temperature maintaining performance, and easy handling.

An embodiment of the present invention has been made in view of the above problems, and an object thereof is to provide (i) a novel cold storage material composition allowing for temperature maintenance of a temperature control target article at a constant temperature for an extended period of time in various control temperature ranges in a range of - 75.0°C to -66.0°C and having excellent easy handling and (ii) a technique for using the novel cold storage material composition.

### Solution to Problem

The inventors of the present invention carried out diligent studies in order to attain the object, and, consequently, accomplished the present invention by finding novel knowledge that a cold storage material composition having a melting temperature in a range of -75.0°C to - 66.0°C, allowing for temperature maintenance of a temperature control target article at a constant temperature for an extended period of time, and having excellent easy handling is obtained by containing, relative to water, lithium ions and bromide ions in respective specific amounts.

That is, a cold storage material composition in accordance with an embodiment of the present invention contains 8.1 mol to 12.6 mol of lithium ions and 7.6 mol to 14.6 mol of bromide ions, relative to 100 mol of water, the cold storage material composition having a melting temperature in a range of -75.0°C to -66.0°C.

A method of using a cold storage material composition in accordance with an embodiment of the present invention includes: a solidifying step of keeping a cold storage material composition at a temperature lower than a melting temperature of the cold storage material composition to solidify the cold storage material composition, the cold storage material composition containing water, lithium ions, and bromide ions; and a maintaining step of maintaining part or whole of a target object at -75.0°C to -66.0°C in an environment at a temperature which exceeds the melting temperature of the cold storage material composition, the cold storage material composition containing 8.1 mol to 12.6 mol of the lithium ions and 7.6 mol to 14.6 mol of the bromide ions, relative to 100 mol of the water.

### Advantageous Effects of Invention

According to an embodiment of the present invention, it is possible to provide, for example, a cold storage material composition allowing for temperature maintenance of a temperature control target article at a constant temperature for an extended period of time in various control temperature ranges in a range of -75.0°C to -66.0°C and having excellent easy handling.

### Brief Description of Drawings

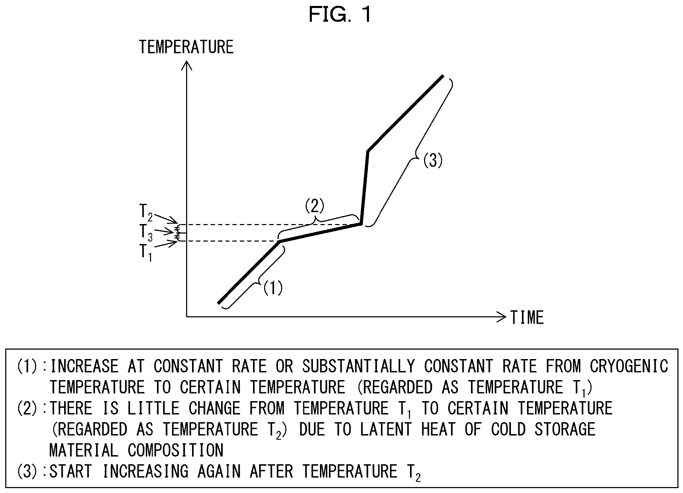

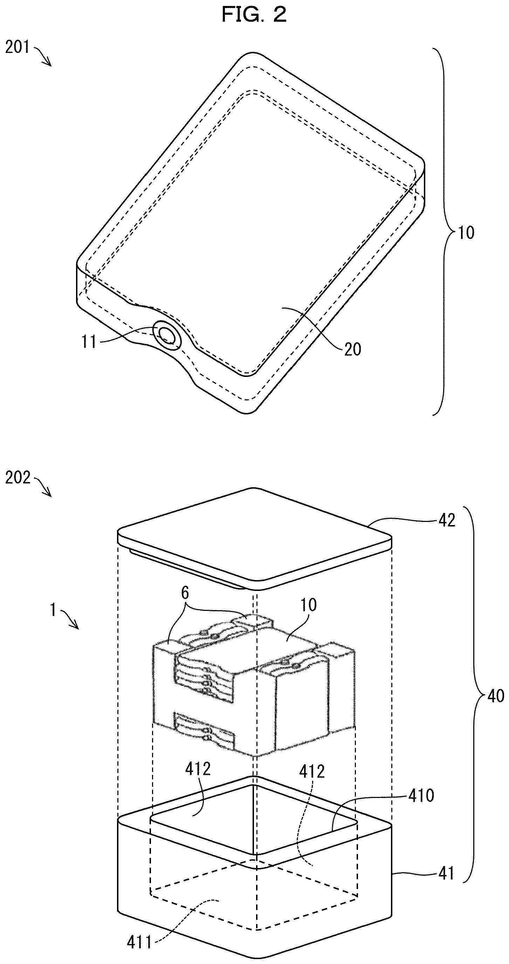

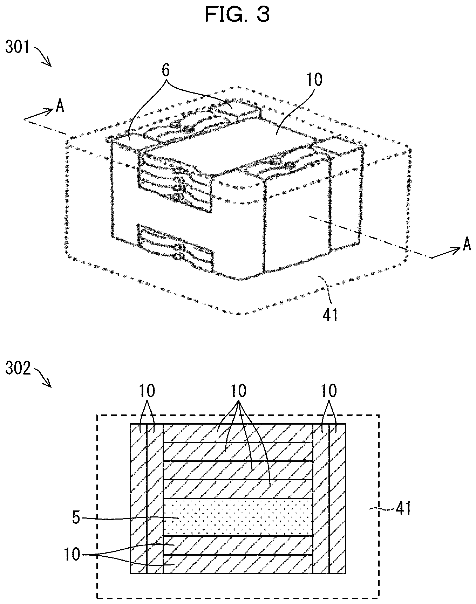

Fig. 1 is a graph obtained by plotting a temperature of a cold storage material composition versus time in a case where the cold storage material composition in a solidified state in accordance with an embodiment of the present invention was placed in a thermostatic bath, and a temperature of the thermostatic bath was then increased from a cryogenic temperature (e.g., -80°C) at a constant rate of temperature increase.
201 of Fig. 2 is a perspective view schematically illustrating an example of a cold storage material in accordance with an embodiment of the present invention. 202 of Fig. 2 is an exploded perspective view schematically illustrating an example of a transport container in accordance with an embodiment of the present invention.
301 of Fig. 3 is a perspective view schematically illustrating an inside of the transport container in accordance with an embodiment of the present invention. 302 of Fig. 3 is a cross-sectional view schematically illustrating a cross-section taken along the line A-A in 301 of Fig. 3.

### Description of Embodiments

The following description will discuss embodiments of the present invention. The present invention is not, however, limited to these embodiments. The present invention is not limited to any configurations described below, and can be altered in various ways within the scope of the claims. The technical scope of the present invention also encompasses embodiments and examples derived from a proper combination of technical means disclosed in different embodiments and examples. Furthermore, a new technical feature can be formed by combining technical means disclosed in differing embodiments. All academic and patent documents cited in the present specification are incorporated herein by reference. Further, any numerical range expressed as "A to B" herein means "not less than A (A or more) and not more than B (B or less)" unless otherwise specified.

### [1. Technical idea of an embodiment of the present invention]

The inventors of the present invention carried out diligent studies, and, consequently, found that the techniques disclosed in Patent Literatures 1 and 2 have room for improvement or have issues as described below.

For example, Patent Literature 1 discloses a cold storage material composition containing water, calcium chloride, and sodium chloride, and having a melting temperature of -54.7°C. However, storage or transportation of an article such as a pharmaceutical product, a medical device, a specimen, an organ, a chemical substance, or food may require the control temperature to be not more than - 66.0°C. Therefore, the technique disclosed in Patent Literature 1 still has room for improvement in terms of a melting temperature.

Further, Patent Literature 2 discloses a refrigerant comprising water and a solute containing lithium chloride and sodium chloride. However, in the technique disclosed in Patent Literature 2, the lithium chloride is contained in the highest weight-based percentage among the components of the solute. Note here that lithium chloride is a substance which is suspected of having aquatic environment toxicity and reproductive toxicity, and is a substance which needs to be handled with care. A small amount of lithium chloride can be used provided that risk measures such as indication of caution regarding handling of the lithium chloride to a user are taken. However, lithium chloride that is used in a large amount as in the technique disclosed in Patent Literature 2 can be said to have high toxicity (chemical risk). That is, the technique disclosed in Patent Literature 2 has room for improvement in terms of easy handling (low toxicity) of the refrigerant.

In view of the above, the inventors of the present invention carried out diligent studies in order to provide a novel cold storage material composition allowing for temperature maintenance of a temperature control target article at a constant temperature for an extended period of time in various control temperature ranges in a range of - 75.0°C to -66.0°C and having excellent easy handling.

As a result, the inventors of the present invention finally accomplished the present invention by uniquely finding the following knowledge that: by preparing a composition that contains lithium ions and bromide ions in respective specific amounts relative to water in a state in which the composition has a temperature higher than or equal to a melting temperature and is in a liquefied state, it is surprisingly possible to obtain a cold storage material composition having a melting temperature in a range of - 75.0°C to -66.0°C, allowing for temperature maintenance of a temperature control target article at a constant temperature for an extended period of time, and having excellent easy handling.

### [2. Cold storage material composition]

A cold storage material composition in accordance with an embodiment of the present invention contains 8.1 mol to 12.6 mol of lithium ions (Li⁺) and 7.6 mol to 14.6 mol of bromide ions (Br⁻), relative to 100 mol of water, and has a melting temperature in a range of -75.0°C to -66.0°C.

With the above configuration, the cold storage material composition in accordance with an embodiment of the present invention has an advantage of allowing for temperature maintenance of a temperature control target article at a constant temperature for an extended period of time in various control temperature ranges in a range of - 75.0°C to -66.0°C and having excellent easy handling. In the present specification, the expression "having excellent easy handling" is intended to mean that a chemical risk has a certain value or less as a result of carrying out a chemical substance risk assessment evaluation in accordance with the Industrial Safety and Health Act in Japan. In the present specification, a cold storage material composition allowing for temperature maintenance of a temperature control target article at a constant temperature for an extended period of time is referred to as a cold storage material composition having fixed-temperature retention. That is, with the above configuration, the cold storage material composition in accordance with an embodiment of the present invention can also be regarded as the cold storage material composition having fixed-temperature retention. Such a cold storage material composition having fixed-temperature retention has an excellent temperature keeping property, has a long duration of a fixed-temperature maintaining state, and also has an advantage of being usable as a substitute material for dry ice. "Fixed-temperature retention", "temperature keeping property" and "duration" will be detailed later.

In the present specification, "a cold storage material composition in accordance with an embodiment of the present invention" can also be referred to simply as "the present cold storage material composition".

The present cold storage material composition is usable as a cold storage material of a latent heat type since the cold storage material composition absorbs thermal energy during a phase transition from a solidified state (solid) to a molten state (liquid) (in other words, during melting). The present cold storage material composition can also be regarded as a "melt-type latent heat cold storage material composition". The molten state encompasses a "gel-like form" (described later).

The types and amounts of ions contained in the present cold storage material composition are intended to mean types and amounts of ions present in the present cold storage material composition in a state of having room temperature (at least 20°C or higher) and in a liquefied state. The "liquefied state" encompasses a "gelled state". The "gelled" will be detailed later. The types and amounts of ions contained in the present cold storage material composition can be measured, for example, at room temperature (e.g., 30°C) by an ion chromatography method. The measurement can be carried out by any publicly-known method. Further, assume a case where a cold storage material composition is produced by carrying out only a mixing step of forming a mixture containing specific ions that can dissociate at room temperature, without carrying out a removing step of removing specific components in the cold storage material composition. In such a case, the types and amounts of ions contained in a resulting cold storage material composition may be determined through theoretical calculation from chemical formulae of specific compounds used in the mixing step and from the added amounts of the specific compounds. The mixing step can be, for example, the following step (1) or (2): step (1) of mixing water and specific compounds that can dissociate at room temperature; or step (2) of mixing aqueous solutions containing specific compounds that can dissociate at room temperature. The removing step can be, for example, a step of cooling a mixture to deposit a compound (e.g., salt) in the mixture and removing the deposited compound from the mixture by, for example, filtration. In the present specification, the term "dissociate" is intended to mean "electrolytically dissociate" and "ionize". The terms "dissociate", "electrolytically dissociate", and "ionize" are interchangeable.

The following description will first discuss components of the present cold storage material composition, and will then discuss physical properties (e.g., a melting temperature) of the present cold storage material composition and a method of producing the present cold storage material composition.

### [2-1. Components of cold storage material composition]

The present cold storage material composition need only contain 8.1 mol to 12.6 mol of lithium ions and 8.1 mol to 14.6 mol of bromide ions, relative to 100 mol of water, and other configurations of the present cold storage material composition are not limited to any particular ones. The present cold storage material composition that has the above configuration has an advantage of allowing for temperature maintenance of a temperature control target article at a constant temperature for an extended period of time in various control temperature ranges in a range of -75.0°C to -66.0°C and having excellent easy handling. Further, the present cold storage material composition that includes the above configuration further has an advantage of having fixed-temperature retention, having an excellent temperature keeping property, having a long duration of a fixed-temperature maintaining state, and being usable as a substitute material for dry ice.

The present cold storage material composition contains, relative to 100 mol of water, preferably 8.1 mol to 12.5 mol, more preferably 8.1 mol to 12.0 mol, even more preferably not less than 8.1 mol and less than 11.3 mol, and particularly preferably 8.1 mol to 11.0 mol of lithium ions. The above configuration allows a resulting cold storage material composition to have an advantage of having a longer duration of a fixed-temperature maintaining state. Furthermore, the present cold storage material composition that contains not more than 11.0 mol of lithium ions has an advantage of making it possible to improve -78°C freezing stability (described later) serving as an indicator that a cold storage material composition is reliably frozen in a general-purpose -80°C-type deep freezer. Moreover, the present cold storage material composition that contains not less than 8.0 mol of lithium ions tends to allow the cold storage material composition to have more excellent fixed-temperature retention.

The present cold storage material composition contains, relative to 100 mol of water, preferably 7.6 mol to 14.5 mol of bromide ions, preferably 7.6 mol to 13.5 mol of bromide ions, and preferably 7.6 mol to 13.0 mol, more preferably not less than 7.6 mol and less than 12.7 mol, more preferably more than 9.3 mol and less than 12.7 mol, even more preferably not less than 9.6 mol and less than 12.7 mol, and particularly preferably 9.6 mol to 12.5 mol of bromide ions. The above configuration allows a resulting cold storage material composition to have an advantage of having a longer duration of a fixed-temperature maintaining state.

The lithium ions and the bromide ions are contained in the present cold storage material composition in a total amount of preferably 15.7 mol to 27.2 mol, more preferably 15.7 mol to 26.5 mol, more preferably 15.7 mol to 26.0 mol, more preferably 15.7 mol to 25.7 mol, more preferably 16.3 mol to 25.7 mol, more preferably 16.9 mol to 25.7 mol, more preferably 16.9 mol to 25.0 mol, more preferably 16.9 mol to 24.3 mol, more preferably 17.2 mol to 25.5 mol, even more preferably 17.7 mol to 24.0 mol, and particularly preferably 18.2 mol to 23.5 mol, relative to 100 mol of water. The above configuration allows a resulting cold storage material composition to have an advantage of having a longer duration of a fixed-temperature maintaining state.

In the present cold storage material composition, an original form(s) of the lithium ions (in other words, what the lithium ions are derived from) is/are not particularly limited. Examples of the original form(s) of the lithium ions include lithium salts such as lithium fluoride, lithium chloride, lithium bromide, lithium iodide, lithium oxide, lithium sulfide, lithium nitride, lithium phosphide, lithium phosphate, lithium carbide, lithium carbonate, lithium nitrate, lithium molybdate, and lithium boride. These lithium salts may be used individually or in combination. In the present cold storage material composition, the lithium ions are preferably derived from lithium bromide and/or lithium chloride, given, for example, (a) that the compounds have excellent easy handling and safety, (b) that the compounds are inexpensive, and (c) that a resulting cold storage material composition has a longer duration of a fixed-temperature maintaining state. In the present cold storage material composition, the lithium ions are particularly preferably derived from lithium bromide so that a resulting cold storage material composition has excellent easy handling. Note that, among the above-listed lithium salts, lithium nitrate and lithium molybdate can function as supercooling inhibitors (described later).

In the present cold storage material composition, an original form(s) of the bromide ions (in other words, what the bromide ions are derived from) is/are not particularly limited. Examples of the original form(s) of the bromide ions include (a) bromide salts such as ammonium bromide, potassium bromide, sodium bromide, calcium bromide, lithium bromide, magnesium bromide, and zinc bromide, and (b) hydrobromic acids. These bromide salts may be used individually or in combination. Given, for example, that a resulting cold storage material composition has a longer duration of a fixed-temperature maintaining state, in the present cold storage material composition, the bromide ions are preferably derived from lithium bromide and/or sodium bromide, and particularly preferably derived from lithium bromide. Sodium bromide has an advantage of being easy to handle as a compound and being highly safe as a compound. Furthermore, the bromide ions may be derived from ammonium bromide and/or potassium bromide, in terms of, for example, excellent easy handling and safety of the compounds. Note that, among the above-listed bromide salts, sodium bromide can function as a crystal nucleating agent (described later). Note also that above-listed hydrobromic acids can function as supercooling inhibitors (described later).

The present cold storage material composition preferably further contains chloride ions. As compared with the cold storage material composition that contains no chloride ions, the cold storage material composition that further contains chloride ions has (a) an advantage such that a period of time from the start of cooling to the start of solidification (hereinafter may be referred to as "time related to start of solidification") of the cold storage material composition is shortened and/or (b) an advantage such that a solidification start temperature of the cold storage material composition is not too low (a difference between the solidification start temperature and a melting temperature is small). As compared with the cold storage material composition that contains no chloride ions, the present cold storage material composition that further contains chloride ions also has an advantage such that the melting temperature is further reduced.

In a case where the present cold storage material composition further contains chloride ions, the cold storage material composition preferably contains, relative to 100 mol of water, not less than 0.3 mol and less than 5.5 mol, more preferably 0.3 mol to 3.4 mol, more preferably 0.3 mol to 2.7 mol, more preferably 0.6 mol to 2.7 mol, more preferably more than 1.5 mol and not more than 2.7 mol, even more preferably 1.8 mol to 2.7 mol, and particularly preferably 1.8 mol to 2.1 mol of chloride ions. According to the above configuration, a resulting cold storage material composition has (a) an advantage such that the time related to start of solidification of the cold storage material composition is further shortened and/or (b) an advantage such that the difference between the solidification start temperature and the melting temperature of the cold storage material composition is smaller.

In a case where the present cold storage material composition further contains chloride ions, a molar quantity of the bromide ions is preferably greater than a molar quantity of the chloride ions in the present cold storage material composition. According to the above configuration, the cold storage material composition has an advantage of having a longer duration of a fixed-temperature maintaining state at -75.0°C to -66.0°C.

In a case where the present cold storage material composition further contains chloride ions, the molar quantity of the bromide ions is preferably at least 0.1 times, more preferably at least 0.5 times, more preferably at least 1.0 time, more preferably at least 1.5 times, even more preferably at least 2.0 times, and particularly preferably at least 2.5 times greater than the molar quantity of the chloride ions in the present cold storage material composition. According to the above configuration, the cold storage material composition has an advantage of having excellent fixed-temperature retention.

In the present cold storage material composition, an original form(s) of the chloride ions (in other words, what the chloride ions are derived from) is/are not particularly limited. Examples of the original form(s) of the chloride ions include chloride salts such as sodium chloride, ammonium chloride, lithium chloride, potassium chloride, magnesium chloride, zinc chloride, strontium chloride, and aluminum chloride. These chloride salts may be used individually or in combination. Note that, among the above-listed chloride salts, sodium chloride can function as a crystal nucleating agent (described later). Note also that, among the above-described chloride salts, strontium chloride can function as a supercooling inhibitor (described later).

The present cold storage material composition preferably further contains a crystal nucleating agent. The cold storage material composition that further contains a crystal nucleating agent has (a) an advantage such that the time related to start of solidification of the cold storage material composition is shortened and/or (b) an advantage such that the solidification start temperature of the cold storage material composition is not too low (the difference between the solidification start temperature and the melting temperature is small). In other words, a compound that has an effect of shortening the time related to start of solidification of the cold storage material composition and/or increasing the solidification start temperature of the cold storage material composition (reducing the difference between the solidification start temperature and the melting temperature) is referred to as a crystal nucleating agent.

The crystal nucleating agent is not particularly limited, and any publicly-known crystal nucleating agent can be used. Examples of the crystal nucleating agent include sodium chloride, sodium bromide, ammonium chloride, calcium carbonate, calcium silicate, ammonium chloride, sodium tetraborate, and magnesium chloride. These crystal nucleating agents may be used individually or in combination. Among these crystal nucleating agents, sodium chloride and sodium bromide are preferable given that (a) an effect of shortening the time related to start of solidification of the cold storage material composition and (b) an effect of increasing the solidification start temperature of the cold storage material composition are great and/or that (c) the cold storage material composition has excellent freezing stability (e.g., -78°C freezing stability). In other words, the cold storage material composition preferably contains at least one of sodium chloride and sodium bromide as the crystal nucleating agent, and more preferably contains both sodium chloride and sodium bromide as the crystal nucleating agent. Further, in a case where the cold storage material composition contains sodium chloride and sodium bromide as the crystal nucleating agent, a contained amount (number of moles) of sodium chloride is preferably greater than a contained amount (number of moles) of sodium bromide. This is because the melting temperature of the cold storage material composition becomes lower.

In a case where a compound used as the crystal nucleating agent dissociates in a cold storage material composition in a liquefied state to be present as ions, an amount of the ions is also incorporated into an amount of ions contained in the cold storage material composition. For example, sodium chloride and sodium bromide dissociate in a cold storage material composition in a liquefied state to be respectively present as (a) chloride ions and sodium ions and (b) bromide ions and sodium ions. Therefore, amounts of chloride ions and bromide ions derived from the crystal nucleating agents such as sodium chloride and sodium bromide are also incorporated into amounts of chloride ions and bromide ions in the cold storage material composition.

In a case where the present cold storage material composition further contains a crystal nucleating agent, an amount of the crystal nucleating agent contained in the cold storage material composition is not particularly limited. The amount of the crystal nucleating agent contained in the cold storage material composition is, for example, preferably 0.1 mol to 10.0 mol, more preferably 0.5 mol to 8.0 mol, more preferably 0.5 mol to 7.0 mol, more preferably 1.0 mol to 6.0 mol, more preferably 1.0 mol to 5.0 mol, more preferably 1.4 mol to 4.0 mol, even more preferably 1.5 mol to 4.0 mol, and particularly preferably 2.0 mol to 4.0 mol, relative to 100 mol of water. The amount of the crystal nucleating agent contained in the cold storage material composition may also be, for example, not more than 3.0 mol relative to 100 mol of water. The amount of the crystal nucleating agent contained in the cold storage material composition may also be, for example, not less than 3.0 mol relative to 100 mol of water. According to the above configuration, the cold storage material composition has (a) an advantage such that the time related to start of solidification of the cold storage material composition is further shortened, (b) an advantage of a smaller difference between the solidification start temperature and the melting temperature of the cold storage material composition, (c) an advantage such that the solidification start temperature is stabilized, so that the cold storage material composition can be solidified at a constant temperature with good reproducibility, and/or (d) an advantage such that the cold storage material composition has excellent freezing stability (e.g., -78°C freezing stability). Further, in particular, the crystal nucleating agent that is contained in the cold storage material composition in an amount of not less than 2.0 mol makes it possible to provide the cold storage material composition having excellent -78°C freezing stability (described later) serving as an indicator that a cold storage material composition is reliably frozen in a general-purpose -80°C-type deep freezer.

The present cold storage material composition preferably further contains a supercooling inhibitor. The supercooling inhibitor carries out a function to assist an effect of the crystal nucleating agent. The cold storage material composition that further contains the supercooling inhibitor in addition to the crystal nucleating agent has (a) an advantage such that the time related to start of solidification of the cold storage material composition is shortened and/or (b) an advantage such that the solidification start temperature of the cold storage material composition is not too low (the difference between the solidification start temperature and the melting temperature is smaller). In other words, a compound that, by being used in combination with the crystal nucleating agent, has an effect of further shortening the time related to start of solidification of the cold storage material composition and/or further increasing the solidification start temperature of the cold storage material composition (further reducing the difference between the solidification start temperature and the melting temperature), as compared with a case where the crystal nucleating agent is used alone, is referred to as a supercooling inhibitor. Further, the cold storage material composition that contains the supercooling inhibitor in addition to the crystal nucleating agent prevents a temperature necessary for solidification of the cold storage material composition from being not too low, and thus has an advantage of making it possible to stably solidify the cold storage material composition in a more general-purpose freezer (e.g., -80°C-type deep freezer).

The supercooling inhibitor is not particularly limited, and any publicly-known supercooling inhibitor can be used. Examples of the supercooling inhibitor include lithium nitrate, lithium molybdate, strontium chloride, and hydrobromic acid. These supercooling inhibitors may be used individually or in combination. Among these supercooling inhibitors, lithium nitrate and hydrobromic acid are preferable given that (a) an effect of shortening the time related to start of solidification of the cold storage material composition and/or (b) an effect of increasing the solidification start temperature of the cold storage material composition is/are great.

In a case where a compound used as the supercooling inhibitor dissociates in a cold storage material composition in a liquefied state to be present as ions, an amount of the ions is also incorporated into an amount of ions contained in the cold storage material composition. For example, lithium nitrate and hydrobromic acid dissociate in a cold storage material composition in a liquefied state to be respectively present as (a) nitrate ions and lithium ions and (b) bromide ions and hydrogen ions. Therefore, amounts of lithium ions and bromide ions derived from the supercooling inhibitors such as lithium nitrate and hydrobromic acid are also incorporated into amounts of lithium ions and bromide ions in the cold storage material composition.

In a case where the present cold storage material composition further contains a supercooling inhibitor, an amount of the supercooling inhibitor contained in the cold storage material composition is not particularly limited. The amount of the supercooling inhibitor contained in the present cold storage material composition is, for example, preferably 0.0001 mol to 0.10 mol, more preferably 0.0003 mol to 0.07 mol, more preferably 0.0005 mol to 0.05 mol, more preferably 0.001 mol to 0.03 mol, more preferably 0.001 mol to 0.02 mol, even more preferably 0.002 mol to 0.01 mol, and particularly preferably 0.002 mol to 0.008 mol, relative to 100 mol of water. According to the above configuration, the cold storage material composition has (a) an advantage such that the time related to start of solidification of the cold storage material composition is further shortened, (b) an advantage of a smaller difference between the solidification start temperature and the melting temperature of the cold storage material composition, and/or (c) an advantage such that the solidification start temperature is stabilized, so that the cold storage material composition can be solidified at a constant temperature with good reproducibility.

As described earlier, lithium chloride is a substance which is suspected of having aquatic environment toxicity and reproductive toxicity, and is a substance which needs to be handled with care. Thus, from the viewpoint of easy handling, an amount of lithium chloride in the cold storage material composition is preferably smaller. The amount of lithium chloride in the cold storage material composition is preferably not more than 10.0 mol, more preferably not more than 9.0 mol, more preferably not more than 8.0 mol, more preferably not more than 7.0 mol, even more preferably not more than 6.0 mol, and particularly preferably not more than 5.5 mol, relative to 100 mol of water. The amount of lithium chloride in the cold storage material composition may be not more than 5.0 mol, not more than 4.0 mol, not more than 3.0 mol, not more than 2.0 mol, or not more than 1.0 mol. The cold storage material composition need not contain lithium chloride. The cold storage material composition which contains no lithium chloride is intended to mean that the amount of lithium chloride in the cold storage material composition is not more than 0.1 mol relative to 100 mol of water.

An amount of calcium ions in the cold storage material composition is not particularly limited but is preferably smaller. A smaller amount of calcium ions in the cold storage material composition has an advantage of stabilizing the melting temperature of the cold storage material composition. The amount of calcium ions in the cold storage material composition is preferably not more than 5.0 mol, more preferably not more than 4.0 mol, more preferably not more than 3.0 mol, more preferably not more than 2.0 mol, more preferably not more than 1.0 mol, even more preferably not more than 0.5 mol, and particularly preferably not more than 0.1 mol, relative to 100 mol of water. The cold storage material composition most preferably contains no calcium ions. The cold storage material composition which contains no calcium ions is intended to mean that the amount of calcium ions in the cold storage material composition is not more than 0.1 mol relative to 100 mol of water.

An amount of ammonium ions in the cold storage material composition is not particularly limited but is preferably smaller. A smaller amount of ammonium ions in the cold storage material composition has an advantage of stabilizing the melting temperature of the cold storage material composition. The amount of ammonium ions in the cold storage material composition is preferably not more than 5.0 mol, more preferably not more than 4.0 mol, more preferably not more than 3.0 mol, more preferably not more than 2.0 mol, more preferably not more than 1.0 mol, even more preferably not more than 0.5 mol, and particularly preferably not more than 0.1 mol, relative to 100 mol of water. The cold storage material composition most preferably contains no ammonium ions. The cold storage material composition which contains no ammonium ions is intended to mean that the amount of ammonium ions in the cold storage material composition is not more than 0.1 mol relative to 100 mol of water.

In an embodiment of the present invention, compounds added in a cold storage material composition are not particularly limited. However, the compounds added in a cold storage material composition are preferably ones that are in no danger of generating harmful fumes and/or do not have the properties of a strong alkali, a strong acid, and the like. The above configuration has an advantage of offering easy production and easy handling of the present cold storage material composition. In other words, the phrase "easy handling" as used herein is intended to mean that substances (compounds) contained in a cold storage material composition and the cold storage material composition itself are in no danger of generating harmful fumes and/or do not have the properties of a strong alkali, a strong acid, and the like. For example, since zinc chloride can generate harmful fumes, and potassium hydroxide is strongly alkaline, it can be said that zinc chloride and potassium hydroxide are difficult-to-handle compounds.

Examples of a combination of compounds that are mixed with water in order to produce the present cold storage material composition include the following combinations: (i) lithium bromide; (ii) lithium bromide and lithium chloride; (iii) lithium bromide and sodium chloride; (iv) lithium bromide, lithium chloride, and sodium chloride; (v) lithium bromide and sodium bromide; (vi) lithium bromide, lithium chloride, and sodium bromide; (vii) lithium bromide, sodium chloride, and sodium bromide; (viii) lithium bromide, lithium chloride, sodium chloride, and sodium bromide; (ix) lithium bromide and any chloride salt; (x) lithium bromide and any crystal nucleating agent; (xi) lithium bromide, any chloride salt, and any crystal nucleating agent.

The present cold storage material composition may contain compounds which do not dissociate (are not ionized) at 30°C, such as a lithium salt, a bromide salt, and a chloride salt. In a case where the compounds contained in the present cold storage material composition do not dissociate at 30°C, even when the compounds contain a lithium element, a bromine element, a chlorine element, and the like, amounts of the compounds contained in the present cold storage material composition do not affect amounts of lithium ions contained in the present cold storage material composition, of bromide ions contained in the present cold storage material composition, and of chloride ions contained in the present cold storage material composition.

The water in the present cold storage material composition is not particularly limited and may be, for example, water usable as drinking water, such as tap water. More specifically, the water may be any of soft water, hard water, pure water, and the like.

The cold storage material composition in accordance with an embodiment of the present invention is, as described later, charged into a container, a bag, or the like so as to be formed into a cold storage material. The cold storage material can be used while being placed in a transport container. However, in a case where a container or the like that shapes the cold storage material breaks during transportation or conveyance, the cold storage material composition charged in the container or the like leaks out of the container or the like. In such a case, there is concern about, for example, the possibility of contaminating a temperature control target article and making the temperature control target article unusable.

Therefore, even in a case where a container or the like charged with the cold storage material composition breaks during transportation or conveyance, in order to minimize a space into which the cold storage material composition leaks out, the cold storage material composition in accordance with an embodiment of the present invention preferably further contains a thickener so as to be in a solid form (including a gel-like form).

The thickener is not particularly limited and may be, for example, water-absorbing resins (such as starches, acrylates, povals, carboxymethyl celluloses, and the like), attapulgite clay, gelatin, agar, silica gel, xanthan gum, gum arabic, guar gum, carrageenan, cellulose, konjac, and the like.

The thickener may be an ionic thickener or a nonionic thickener. It is preferable to select, as the thickener, a nonionic thickener that does not affect the ions contained in the cold storage material composition. Examples of the nonionic thickener include guar gum, dextrin, polyvinyl pyrrolidone, hydroxyethyl cellulose, and the like. Among these nonionic thickeners, hydroxyethyl cellulose which is excellent in gel stability and environmental adaptability is particularly preferable.

Lithium ions contained in the present cold storage material composition and bromide ions contained in the present cold storage material composition, and chloride ions optionally contained in the present cold storage material composition may form a salt over time due to a change in temperature, depending on concentrations at which the lithium ions, the bromide ions, and chloride ions are contained in the present cold storage material composition. The formed salt may be deposited. In a case where the present cold storage material composition contains the thickener, the thickener not only allows the cold storage material composition to be in the gel-like form but also allows ions dissolved in the cold storage material composition to be efficiently dispersed. This makes it possible to prevent deposition of the salt.

In a case where the present cold storage material composition contains a thickener, the cold storage material composition can be gelled in an environment at a temperature higher than or equal to the melting temperature of the cold storage material composition. The cold storage material composition containing the thickener can undergo a phase transition from a solidified state (solid) to a molten state (gel-like form).

The present cold storage material composition can also contain, as necessary, a phase separation inhibitor (e.g., oleic acid, sodium oleate, potassium oleate, potassium metaphosphate, sodium silicate, or potassium isostearate), a perfume, a colorant, an antibacterial agent, a high molecular polymer, other organic compound(s), other inorganic compound(s), and/or the like, in addition to the above-listed components.

As long as the present cold storage material composition has a melting temperature in a range of -75.0°C to -66.0°C, the present cold storage material composition in a state of having a temperature higher than or equal to the melting temperature and in a liquefied state may contain other substance(s) and/or other ions as well as lithium ions, bromide ions, and chloride ions. Examples of the other substance(s) include metals such as a light metal and a heavy metal. Examples of the light metal include aluminum, magnesium, beryllium, and titanium. Examples of the heavy metal include iron, lead, gold, platinum, silver, copper, chromium, cadmium, mercury, zinc, arsenic, manganese, cobalt, nickel, molybdenum, tungsten, tin, bismuth, uranium, and plutonium. Examples of the other ions include metal ions such as light metal ions of the above light metal and heavy metal ions of the above heavy metal.

The materials (compounds, water, and the like) used for production of the present cold storage material composition may include any of the above-listed metals.

### [2-2. Physical properties of cold storage material composition]

### (Melting temperature)

A cold storage material composition in accordance with an embodiment of the present invention has a melting temperature in a range of -75.0°C to -66.0°C.

In the present specification, the "melting temperature" of a cold storage material composition is intended to mean "a temperature of the cold storage material composition during a period from when the cold storage material composition in a solid state starts melting to when the cold storage material composition turns into a liquefied state". Note that the word "liquefied" encompasses the above-described "gelled". The "melting temperature" will be more specifically discussed with reference to Fig. 1. Fig. 1 is a graph obtained by plotting a temperature of a cold storage material composition versus time in a case where the cold storage material composition in a solidified state in accordance with an embodiment of the present invention was placed in a thermostatic bath, and a temperature of the thermostatic bath was then increased from a cryogenic temperature at a constant rate of temperature increase. As compared with the temperature of the thermostatic bath which is increased at a constant rate, the temperature of the cold storage material composition changes, as shown in Fig. 1, in the order of the following (1) to (3): (1) The temperature of the cold storage material composition increases at a constant rate or a substantially constant rate from the cryogenic temperature to a certain temperature (regarded as temperature T₁); (2) there is little change from the temperature T₁ to a certain temperature (regarded as temperature T₂) due to latent heat of the cold storage material composition; and (3) the temperature of the cold storage material composition starts increasing again after the temperature T₂. The temperature T₁ as used herein is referred to as "melting start temperature", and the temperature T₂ as used herein is referred to as "melting end temperature". A midpoint between the temperature T₁ and the temperature T₂, i.e., temperature T₃, is defined herein as "melting temperature".

Further, in regard to the cold storage material composition in accordance with an embodiment of the present invention, a state in which, due to the action of latent heat of the cold storage material composition, the temperature of the cold storage material composition is maintained, from the melting start temperature T₁ to the melting end temperature T₂, in a range from the melting start temperature T₁ to a temperature less than 2.5°C higher than the melting start temperature T₁ and for a period of time longer than or equal to a certain period of time (e.g., 10 minutes or longer) is defined as "fixed-temperature maintenance". In a case where the cold storage material composition exhibits fixed-temperature maintenance, the cold storage material composition is regarded as having fixed-temperature retention. The present cold storage material composition is a cold storage material composition having fixed-temperature retention. In other words, the present cold storage material composition can be regarded as a cold storage material composition which exhibits fixed-temperature maintenance when evaluated by the above-described criterion. Note that a more specific method for evaluating the fixed-temperature retention of the cold storage material composition is as described in Examples.

A melting temperature of a cold storage material composition is not particularly limited as long as the melting temperature is in a range of -75.0°C to -66.0°C, and can be set as appropriate in accordance with different control temperatures required for a variety of temperature control target articles. For example, storage or transportation of an article such as a pharmaceutical product, a medical device, a specimen, an organ, a chemical substance, or food may require the control temperature to be not more than -66.0°C. Further, storage or transportation of some of the temperature control target articles, i.e., bio drug substance, regenerative cells, vaccines, antibodies, gene therapy vectors, etc. may require the control temperature to be not more than -68.5°C. Thus, from the viewpoint of being usable for a wide variety of temperature control target articles, the present cold storage material composition has a melting temperature preferably in a range of -75°C to -68.5°C. As in the case of the cold storage material composition, a cold storage material in accordance with an embodiment of the present invention preferably has a melting temperature in the above-described ranges.

The melting temperature of the cold storage material composition can be measured by (i) placing a measurement test sample in a commercially available thermostatic bath equipped with a temperature control unit, (ii) increasing or decreasing a temperature of the thermostatic bath at a constant rate, and (iii) monitoring a temperature of the test sample with use of a thermocouple while the temperature of the thermostatic bath is being increased or decreased.

### (-78°C freezing stability)

An embodiment of the present invention provides a cold storage material composition having excellent -78°C freezing stability.

The cold storage material composition is ordinarily in a molten state (liquid or gel-like form). In order to exhibit fixed-temperature retention, the cold storage material composition needs to be solidified (frozen) by being made in a solidified state, i.e., being stored at a temperature (storage temperature) lower than the melting temperature of the cold storage material composition.

Examples of a method of solidifying a cold storage material composition having a melting temperature at a low temperature (e.g., in a range of -75.0°C to -66.0°C), such as the present cold storage material composition include a method of using a freezer (deep freezer) capable of controlling a temperature of the cold storage material composition at a temperature lower than the melting temperature.

A control temperature of a commonly widely used freezer (general-purpose freezer) among commercially available deep freezers is approximately -85°C to approximately -80°C. Note, however, that the cold storage material composition is desirably stably frozen also at -76°C in consideration of, for example, the number of years for which the freezer is used, a degree of adhesion of frost, a loading capacity in the freezer, a variation caused by a loading position in the freezer, and/or a product error.

As the deep freezer, a freezer (cryogenic freezer) capable of controlling a temperature to a cryogenic temperature such as a temperature lower than or equal to - 120°C is also commercially available. An environment in which such a cryogenic freezer can be introduced and operated is limited from the viewpoint of price, size, and maintenance cost. Thus, a cold storage material composition that requires such a cryogenic freezer instead of a general-purpose freezer in order to solidify the cold storage material composition may be limited in environment in which the cold storage material composition can be used, and, consequently limited in application of the cold storage material composition.

Thus, from the viewpoint of providing a cold storage material composition that can be used in a wider environment, and, consequently, can be applied for a wider variety of purposes, the present cold storage material composition preferably can be stably solidified in a general-purpose freezer, in other words, preferably can be stably solidified in a temperature range of -85°C to -76°C.

The inventors of the present invention carried out diligent studies in order to provide the present cold storage material composition that can be stably solidified in a temperature range of -85°C to -76°C, and, consequently, newly found that -78°C freezing stability of the present cold storage material composition can be surprisingly enhanced by satisfying either of the following conditions: a condition (i) that the amount of lithium ions in the present cold storage material composition is adjusted to a specific amount; and a condition (ii) that a specific amount of the crystal nucleating agent is contained in the cold storage material composition. In an embodiment of the present invention, both the above conditions (i) and (ii) are preferably satisfied from the viewpoint that -78°C freezing stability of the present cold storage material composition can be further enhanced.

Note here that "-78°C freezing stability" of a cold storage material composition is a novel physical property value related to the cold storage material composition and found by the inventors of the present invention. The cold storage material composition having excellent "-78°C freezing stability" indicates that in a temperature range of - 85°C to -76°C, the cold storage material composition can be stably solidified (frozen), in other words, can be stably solidified even in a case where a general-purpose freezer is used.

Thus, a cold storage material composition in accordance with a preferable embodiment of the present invention, i.e., a cold storage material composition not only having a melting temperature in a range of -75.0°C to -66.0°C and having excellent easy handling but also having excellent "-78°C freezing stability" can be expressed, for example, as follows: A cold storage material composition containing 8.1 mol to 11.0 mol of lithium ions and 9.6 mol to 12.5 mol of bromide ions, relative to 100 mol of water, having a melting temperature in a range of -75.0°C to -66.0°C, and further containing a crystal nucleating agent, the crystal nucleating agent being contained in an amount of not less than 2.0 mol relative to 100 mol of the water.

Note that -78°C freezing stability of the cold storage material composition can be measured and evaluated by a method described in Examples.

### [2-3. Method of producing cold storage material composition]

A method of preparing a cold storage material composition in accordance with an embodiment of the present invention is not limited to any particular method and can be any publicly-known method. For example, a cold storage material composition can be prepared by a method involving the following (I-1) and (I-2): the method involving: (I-1) mixing a lithium salt, a bromide salt (or lithium bromide), and, if necessary, a chloride salt, a crystal nucleating agent, a supercooling inhibitor, and a thickener in advance with use of a tumbler, a ribbon blender, or the like; and (I-2) then putting a resulting mixture into a container, pouring water into the container, and stirring the mixture in the container with use of a mixer or the like while cooling the container. Alternatively, the cold storage material composition can be prepared by a method involving the following (II-1) to (II-3): the method involving: (II-1) preparing an aqueous solution of a lithium salt and an aqueous solution of a bromide salt (or an aqueous solution of lithium bromide), and, if necessary, an aqueous solution of a chloride salt, an aqueous solution of a supercooling inhibitor, and an aqueous solution of a crystal nucleating agent; (II-2) mixing the aqueous solution of the crystal nucleating agent and a thickener to prepare the aqueous solution of the crystal nucleating agent in which aqueous solution the thickener is dispersed; and (II-3) mixing the aqueous solution of the lithium salt and the aqueous solution of the bromide salt (or the aqueous solution of the lithium bromide), and, if necessary, the aqueous solution of the chloride salt, the aqueous solution of the supercooling inhibitor, and the aqueous solution of the crystal nucleating agent in which aqueous solution the thickener is dispersed. Further alternatively, the cold storage material composition can be prepared by a method involving the following (III-1) to (III-3): the method involving: (III-1) preparing an aqueous solution containing a lithium salt and a bromide salt (or lithium bromide), and, if necessary, a chloride salt, a supercooling inhibitor, and a crystal nucleating agent; (III-2) mixing water and a thickener to prepare an aqueous solution in which the thickener is dispersed; and (III-3) mixing the aqueous solution containing the lithium salt and the bromide salt (or the lithium bromide), and, if necessary, the chloride salt, the supercooling inhibitor, and the crystal nucleating agent with the aqueous solution in which the thickener is dispersed. Further alternatively, the cold storage material composition can be prepared by a method involving the following (IV-1) to (IV-3): the method involving: (IV-1) preparing an aqueous solution containing a lithium salt and a bromide salt (or lithium bromide), and, if necessary, a supercooling inhibitor, and an aqueous solution containing a chloride salt as a crystal nucleating agent; (IV-2) mixing the aqueous solution of the crystal nucleating agent (chloride salt) and a thickener to prepare the aqueous solution of the crystal nucleating agent (chloride salt) in which aqueous solution the thickener is dispersed; and (IV-3) mixing the aqueous solution containing the lithium salt and the bromide salt (or lithium bromide), and, if necessary, the supercooling inhibitor with the aqueous solution of the crystal nucleating agent (chloride salt) in which aqueous solution the thickener is dispersed. Further alternatively, the cold storage material composition can be prepared by a method involving the following (V-1) to (V-3): the method involving: (V-1) preparing an aqueous solution containing a lithium salt and a bromide salt (or lithium bromide), and, if necessary, a supercooling inhibitor, and an aqueous solution containing a chloride salt and a bromide salt as a crystal nucleating agent; (V-2) mixing the aqueous solution of the crystal nucleating agent (the chloride salt and the bromide salt) and a thickener to prepare the aqueous solution of the crystal nucleating agent (the chloride salt and the bromide salt) in which aqueous solution the thickener is dispersed; and (V-3) mixing the aqueous solution containing the lithium salt and the bromide salt (or lithium bromide), and, if necessary, the supercooling inhibitor with the aqueous solution of the crystal nucleating agent (the chloride salt and the bromide salt) in which aqueous solution the thickener is dispersed.

Specific examples of a method of producing a cold storage material composition in accordance with an embodiment of the present invention include the following aspects.

[A] A method of mixing water and lithium bromide, and, if necessary, lithium nitrate, and, as necessary, further mixing sodium chloride and/or hydroxyethyl cellulose relative to a resulting mixture.
[B] A method of mixing water, lithium bromide, and lithium chloride, and, if necessary, lithium nitrate, and, as necessary, further mixing sodium chloride and/or hydroxyethyl cellulose relative to a resulting mixture.
[C] A method of mixing water and lithium bromide, and, if necessary, lithium nitrate, and, as necessary, further mixing sodium bromide and/or hydroxyethyl cellulose relative to a resulting mixture.
[D] A method of mixing water, lithium bromide, and lithium chloride, and, if necessary, lithium nitrate, and, as necessary, further mixing sodium bromide and/or hydroxyethyl cellulose relative to a resulting mixture.
[E] A method of mixing water and lithium bromide, and, if necessary, lithium nitrate, and, as necessary, further mixing sodium chloride, sodium bromide and/or hydroxyethyl cellulose relative to a resulting mixture.
[F] A method of mixing water, lithium bromide, and lithium chloride, and, if necessary, lithium nitrate, and, as necessary, further mixing sodium chloride, sodium bromide and/or hydroxyethyl cellulose relative to a resulting mixture.

In the above [A] to [F], a used amount(s) of lithium bromide, lithium chloride, lithium nitrate, sodium chloride, and/or sodium bromide used can be set as appropriate so that amounts of lithium ions, bromide ions, and chloride ions in a resulting cold storage material composition are the above-described amounts.

Next, the following description will discuss the "cold storage material".

### [3. Cold storage material]

A cold storage material in accordance with an embodiment of the present invention need only include the above-described cold storage material composition. Other configurations, materials, and the like of the cold storage material are not limited.

The cold storage material in accordance with an embodiment of the present invention is usable as a cold storage material of a latent heat type since a cold storage material composition which forms the cold storage material absorbs thermal energy in undergoing a phase transition from a solidified state (solid) to a molten state (liquid) (in other words, in melting). The cold storage material in accordance with an embodiment of the present invention can also be regarded as a melt-type latent heat cold storage material. Note that the molten state encompasses the above-described "gel-like form".

The cold storage material in accordance with an embodiment of the present invention can be obtained by, for example, charging the above-described cold storage material composition in a container, a bag, or the like.

The container or the bag is preferably made mainly of resin (e.g., synthetic resin) in order to prevent the cold storage material composition from leaking out due to rusting and corrosion caused by the cold storage material composition. In other words, the cold storage material in accordance with an embodiment of the present invention contains the above-described cold storage material composition in accordance with an embodiment of the present invention and resin.

Examples of the resin include polyvinyl chloride, polyethylene, polypropylene, polyethylene terephthalate, polystyrene, nylon, and polyester.

One of these materials may be used alone. Alternatively, two or more of the materials can be used in combination (e.g., by taking on a multilayer structure) in order to improve thermal resistance and barrier performance. From the viewpoint of handling and cost, the container or the bag is preferably made of polyethylene.

A shape of the container or the bag is not limited to any particular one. However, from the viewpoint of efficiently exchanging heat between the cold storage material composition and a temperature control target article or a space around the temperature control target article via the container or the bag, the container or the bag preferably has a shape that has a small thickness and that makes it possible to achieve a large surface area. A cold storage material can be formed by filling such a container or such a bag with the cold storage material composition.

Note that more specific examples of the container or the bag include a container and a bag disclosed in Japanese Patent Application Publication Tokukai No. 2015-78307, which is incorporated herein by reference.

A melting temperature of a cold storage material in accordance with an embodiment of the present invention can be regarded as being identical to a melting temperature of a cold storage material composition which the cold storage material includes.

Next, the following description will discuss the "transport container".

### [4. Transport container]

A transport container in accordance with an embodiment of the present invention need only include the above-described cold storage material in accordance with an embodiment of the present invention. Other specific configurations, materials, and the like of the transport container are not particularly limited.

Fig. 2 illustrates an example of the transport container in accordance with an embodiment of the present invention. 201 of Fig. 2 is a perspective view schematically illustrating a cold storage material 10 in accordance with an embodiment of the present invention. 202 of Fig. 2 is an exploded perspective view schematically illustrating a transport container 1 in accordance with an embodiment of the present invention.

As illustrated in 201 and 202 of Fig. 2, an opening of the cold storage material 10 in accordance with the present embodiment is closed by a cap 11 of the cold storage material. A cold storage material composition 20 in accordance with an embodiment of the present invention is charged into the cold storage material 10 through the opening. The cold storage material 10 can be used while being housed or placed in a thermal insulation container 40. In other words, the transport container in accordance with an embodiment of the present invention includes the above-described cold storage material in accordance with an embodiment of the present invention and a thermal insulation container.

A material of the cold storage material 10 and a material of the cap 11 for the cold storage material are not particularly limited, and any conventionally known materials can be used as appropriate.

By including, for example, a box 41 and a lid 42 which is fitted into an opening 410 of the box, the thermal insulation container 40 is configured to have a thermal insulation property.

A material of the thermal insulation container 40 is not limited to any specific material, provided that the material of the thermal insulation container 40 has a thermal insulation property. As the material of the thermal insulation container 40, a foamed plastic is suitably used because the foamed plastic is lightweight and inexpensive and can prevent dew condensation. As the material of the thermal insulation container 40, a vacuum thermal insulation material is also suitably used because the vacuum thermal insulation material has an excellent thermal insulation property, maintains a temperature for an extended period of time, and can prevent dew condensation. Specific examples of the foamed plastic include foamed polyurethane, foamed polystyrene, foamed polyethylene, foamed polypropylene, foamed AS resin, and foamed ABS resin. Examples of the vacuum thermal insulation material include vacuum thermal insulation materials whose cores are made of silica powder, glass wool, glass fiber, or the like. The thermal insulation container 40 may be constituted by a combination of the foamed plastic and the vacuum thermal insulation material. In such a case, a thermal insulation container 40 having high thermal insulation performance can be obtained by, for example, (i) covering, with the vacuum thermal insulation material, an outer surface or an inner surface of each of the box 41 and the lid 42 that are made of the foamed plastic, or (ii) embedding the vacuum thermal insulation material in walls constituting each of the box 41 and the lid 42 that are made of the foamed plastic.

301 of Fig. 3 is a perspective view schematically illustrating an inside of the transport container 1. 302 of Fig. 3 is a cross-sectional view schematically illustrating a cross-section taken along the line A-A in 301 of Fig. 3.

As illustrated in 202 of Fig. 2, the thermal insulation container 40 includes the box 41 and the lid 42, and the transport container 1 in accordance with an embodiment of the present invention includes the thermal insulation container 40, the cold storage materials 10, and spacers 6. In other words, the transport container in accordance with an embodiment of the present invention includes the above-described cold storage material in accordance with an embodiment of the present invention, a thermal insulation container, and spacers. As illustrated in Figs. 2 and 3, in a case where cold storage materials 10 are housed or placed in the transport container 1, the transport container 1 in accordance with an embodiment of the present invention can include the spacers 6 in order to (1) fill a space between (a) a surface of the lid 42 which covers a space in the box, lateral surfaces 412 of the box, and a bottom surface 411 of the box and (b) the cold storage materials 10 and (2) secure a space 5 for accommodating a temperature control target article as illustrated in 302 of Fig. 3.

Although the transport container 1 includes 10 cold storage materials 10 in Figs. 2 and 3, the number of cold storage materials included in the transport container 1 is not particularly limited, provided that at least one cold storage material is included in the transport container 1. The transport container 1 includes preferably two or more cold storage materials 10, more preferably four or more cold storage materials 10, even more preferably six or more cold storage materials 10, and particularly preferably ten or more cold storage materials 10, from the viewpoint of storing or transporting a temperature control target article at a control temperature for an extended period of time and/or at a control temperature with stability. The number of cold storage materials 10 included in the transport container 1 may be selected as appropriate according to, for example, the size of a cold storage material 10, a period of time for which a temperature control target article is to be stored or transported, and an ambient temperature during storage or transportation of the temperature control target article.

A material of the spacers 6 is not particularly limited and may be, for example, polyurethane, polystyrene, polyethylene, polypropylene, AS resin, ABS resin, and a foamed plastic obtained by foaming such a resin.

According to an embodiment of the present invention, a pair of spacers 6 is placed in the thermal insulation container 40 so as to face each other. In a case where the transport container 1 in accordance with an embodiment of the present invention includes the spacers 6, a location at which to place the cold storage materials 10 is determined. This makes it possible to facilitate packing. The size and number of spacers 6 included in the transport container 1 are not particularly limited, and can be set as appropriate in accordance with, for example, the sizes of the transport container 1, the cold storage material 10, and a temperature control target article.

In Figs. 2 and 3, the transport container 1 includes one space 5 for accommodating the temperature control target article. However, the number of spaces 5 included in the transport container 1 is not particularly limited, provided that the transport container 1 includes at least one space 5. Alternatively, the transport container 1 may include a plurality of spaces 5. For example, separate spaces 5 may be available by placing the cold storage material(s) 10 and/or the spacer(s) 6 in one space 5.

With the transport container in accordance with an embodiment of the present invention, an article that requires temperature control (i.e., temperature control target article) can be stored or transported regardless of an ambient temperature while the article is maintained at a temperature in a range of -75.0°C to -66.0°C for an extended period of time. The transport container in accordance with the present embodiment can be suitably used to store or transport various kinds of articles that require temperature control, such as cells, pharmaceutical products, medical devices, specimens, organs, chemical substances, food, and the like. As described above, the transport container in accordance with an embodiment of the present invention can maintain a temperature control target article at a temperature in a range of -75.0°C to -66.0°C for an extended period of time. Thus, the transport container in accordance with an embodiment of the present invention can also be regarded as "temperature keeping container".

Further, storage or transportation of some of the temperature control target articles, i.e., bio drug substance, regenerative cells, vaccines, antibodies, and gene therapy vectors may require the control temperature to be -68.5°C. Thus, for these applications, it is possible to suitably use a transport container capable of storing or transporting the articles while maintaining the articles at not more than - 68.5°C (for example, a transport container capable of storing or transporting the articles while maintaining the articles at -75.0°C to -68.5°C) in accordance with an embodiment of the present invention. Note that examples of the applications for which the transport container storing or transporting the articles while maintaining the articles at not more than - 68.5°C is used include transport of cells (e.g., conveyance of frozen cells inside a cell culture center, transport of frozen cells from one facility to another facility (for example, from a cell bank to a cell culture center), and the like) and storage of cells (e.g., temporary storage of frozen cells in a sterile room or a clean bench, storage (back-up) application at a power failure in a deep freezer used in the cell bank or the cell culture center, and the like).

Note that more specifically, the thermal insulation container described above can be configured as disclosed in Japanese Patent Application Publication Tokukai No. 2015-78307, which is incorporated herein by reference.

The following description will discuss "a method of using a cold storage material composition".

### [5. Method of using cold storage material composition]

A method of using a cold storage material composition in accordance with an embodiment of the present invention includes: a solidifying step of keeping a cold storage material composition at a temperature lower than a melting temperature of the cold storage material composition to solidify the cold storage material composition, the cold storage material composition containing water, lithium ions, and bromide ions; and a maintaining step of maintaining part or whole of a target object at -75.0°C to -66.0°C in an environment at a temperature which exceeds the melting temperature of the cold storage material composition, the cold storage material composition containing 8.1 mol to 12.6 mol of the lithium ions and 7.6 mol to 14.6 mol of the bromide ions, relative to 100 mol of the water.

Here, in the present specification, the "target object" is intended to mean a temperature control target article and/or a surrounding environment (including a vapor phase, a liquid phase, and a solid phase) of the temperature control target article.

The cold storage material composition in the method of using the cold storage material composition in accordance with an embodiment of the present invention is preferably the cold storage material composition in accordance with an embodiment of the present invention. In the description of the cold storage material composition, the description in the [2. Cold storage material composition] section can be incorporated as appropriate.

Further, the cold storage material composition in the method of using the cold storage material composition in accordance with an embodiment of the present invention is preferably a cold storage material composition produced by a method of producing a cold storage material composition in accordance with an embodiment of the present invention. In the description of the method of producing the cold storage material composition, the description in the [2-3. Method of producing cold storage material composition] section can be incorporated as appropriate.

Specifically, the using method in accordance with an embodiment of the present invention can be provided in any of the following aspects (1) to (5):
(1) A method of using a cold storage material composition as follows: That is, the cold storage material described in the [3. Cold storage material] section is prepared by charging a cold storage material composition into a container or the like. Thereafter, the cold storage material is kept at a temperature lower than a melting temperature of the cold storage material composition to solidify the cold storage material (solidifying step). The solidified cold storage material is placed in the transport container described in the [4. Transport container] section, and the target object is stored and/or transported while the target object is maintained at -75.0°C to -66.0°C in an environment at a temperature which exceeds a melting temperature of the cold storage material composition (maintaining step).
(2) A method of using a cold storage material composition as follows: That is, the cold storage material described in the [3. Cold storage material] section, which has been prepared by charging a cold storage material composition, is put in advance in a freezer, a cryogenic freezer, or the like which is operated at a temperature lower than a melting temperature of the cold storage material composition (solidifying step). In this way, during a power failure, a target object in the freezer or the cryogenic freezer is stored while the target object is maintained at -75.0°C to -66.0°C (maintaining step).
(3) A method of using a cold storage material composition as follows: That is, in preparing the cold storage material described in the [3. Cold storage material] section by charging a cold storage material composition into a container or the like, the cold storage material composition in a liquid state and a target object are put in the container so that the target object is embedded in the cold storage material composition. Thereafter, the cold storage material is kept at a temperature lower than a melting temperature of the cold storage material composition to solidify the cold storage material (solidifying step). In this way, the target object is stored and/or transported while the target object is maintained at -75.0°C to -66.0°C in an environment at a temperature which exceeds a melting temperature of the cold storage material composition (maintaining step).
(4) A method of using a cold storage material composition as follows: That is, the cold storage material described in the [3. Cold storage material] section is prepared by charging a cold storage material composition into a container or the like. Thereafter, the cold storage material is kept at a temperature lower than a melting temperature of the cold storage material composition to solidify the cold storage material (solidifying step). The solidified cold storage material is brought into contact with a target object which is present in an environment at a temperature which exceeds a melting temperature of the cold storage material composition. In this way, a contacting part of a target object is maintained at -75.0°C to -66.0°C (maintaining step).
(5) A method of using a cold storage material composition as follows: That is, after a cold storage material composition in a liquid state is embedded in a target object, the cold storage material composition is kept at a temperature lower than a melting temperature of the cold storage material composition to solidify the cold storage material composition (solidifying step). In this way, the target object is stored and/or transported while the target object is maintained at -75.0°C to -66.0°C in an environment at a temperature which exceeds a melting temperature of the cold storage material composition (maintaining step).

In the using methods in (1) to (5) above, a specific method for keeping a cold storage material composition or the cold storage material described in the [3. Cold storage material] section at a temperature lower than a melting temperature of the cold storage material composition to solidify the cold storage material composition or the cold storage material is exemplified by the following method: That is, a method of putting the cold storage material composition or the cold storage material in a commercially available - 85°C or -80°C freezer whose temperature can be adjusted to a temperature lower than the melting temperature of the cold storage material composition, preferably a cryogenic freezer whose temperature can be adjusted to a temperature not more than -80°C (e.g., -120°C), to solidify the cold storage material composition or the cold storage material. In the using methods in (1) to (5) above, a cold storage material composition or the cold storage material described in the [3. Cold storage material] section may be kept at a temperature lower than a solidification start temperature of the cold storage material composition so that the cold storage material composition or the cold storage material is solidified.

In the solidifying step, the temperature lower than the melting temperature is preferably a temperature not more than -80°C. The above configuration also has an advantage of solidifying the cold storage material composition sufficiently and in a short time.

The cold storage material composition in accordance with an embodiment of the present invention has excellent - 78°C freezing stability. This enables the cold storage material composition to be stably frozen also in a temperature range of -85°C to -76°C that can be adjusted with use of a general-purpose freezer. That is, the cold storage material composition can be stably frozen even in a case where a general-purpose freezer is used. Thus, in another embodiment of the present invention, the temperature lower than the melting temperature is preferably a temperature of -85°C to -76°C in the solidifying step. The above configuration has an advantage of making it possible to stably solidify the cold storage material composition while using a general-purpose freezer.

Although some specific examples of the method of using a cold storage material composition have been given above, the method of using a cold storage material composition in accordance with an embodiment of the present invention is not limited to those examples of the using method. The method of using a cold storage material composition provided by an embodiment of the present invention encompasses any method including: (i) a solidifying step of keeping a cold storage material composition in accordance with an embodiment of the present invention or a cold storage material composition produced by a method of producing a cold storage material composition in accordance with an embodiment of the present invention, at a temperature lower than a melting temperature of the cold storage material composition to solidify the cold storage material composition; and (ii) a maintaining step of maintaining part or whole of a target object at -75.0°C to -66.0°C by use of latent heat of melting of the solidified cold storage material composition in an environment at a temperature which exceeds the melting temperature of the cold storage material composition.

An embodiment of the present invention may include the following features.

<1> A cold storage material composition containing 8.1 mol to 12.6 mol of lithium ions and 7.6 mol to 14.6 mol of bromide ions, relative to 100 mol of water, the cold storage material composition having a melting temperature in a range of -75.0°C to -66.0°C.
<2> The cold storage material composition as set forth in <1>, further containing chloride ions.
<3> The cold storage material composition as set forth in <2>, wherein a molar quantity of the bromide ions is greater than a molar quantity of the chloride ions in the cold storage material composition.
<4> The cold storage material composition as set forth in <2> or <3>, wherein a molar quantity of the bromide ions is at least 2.5 times greater than a molar quantity of the chloride ions in the cold storage material composition.
<5> The cold storage material composition as set forth in any one of <1> to <4>, wherein the cold storage material composition contains 8.1 mol to 11.0 mol of the lithium ions relative to 100 mol of the water.
<6> The cold storage material composition as set forth in any one of <1> to <5>, further containing a crystal nucleating agent.
<7> The cold storage material composition as set forth in <6>, wherein the crystal nucleating agent is contained in an amount of not less than 2.0 mol relative to 100 mol of the water.
<8> The cold storage material composition as set forth in any one of <1> to <7>, further containing a thickener.
<9> A cold storage material including a cold storage material composition described in any one of <1> to <8>.
<10> A transport container including a cold storage material described in <9>.
<11> A method of using a cold storage material composition, including: a solidifying step of keeping a cold storage material composition at a temperature lower than a melting temperature of the cold storage material composition to solidify the cold storage material composition, the cold storage material composition containing water, lithium ions, and bromide ions; and a maintaining step of maintaining part or whole of a target object at -75.0°C to -66.0°C in an environment at a temperature which exceeds the melting temperature of the cold storage material composition, the cold storage material composition containing 8.1 mol to 12.6 mol of the lithium ions and 7.6 mol to 14.6 mol of the bromide ions, relative to 100 mol of the water.
<12> The method as set forth in <11>, wherein the temperature lower than the melting temperature is not more than -80°C in the solidifying step.
<13> The method as set forth in <1 1>, wherein the temperature lower than the melting temperature is -85°C to -76°C in the solidifying step.

### Examples

The following description will more specifically discuss an embodiment of the present invention with reference to Examples. However, the present invention is not limited to such Examples.

The following materials were used in Examples and Comparative Examples.

### <Inorganic salt>

Aqueous lithium bromide solution [Aqueous lithium bromide solution (having a lithium bromide concentration of 55.0% by weight), available from The Honjo Chemical Corporation] Aqueous lithium chloride solution [Aqueous lithium chloride solution (having a lithium chloride concentration of 40.0% by weight), available from The Honjo Chemical Corporation] Aqueous calcium chloride solution [Aqueous calcium chloride solution (having a calcium chloride concentration of 40.0% by weight), available from Tosoh Corporation]

### <Crystal nucleating agent>

Sodium chloride [Refined salt, available from Nippon Salt Manufacturing Co., Ltd.]
Sodium bromide [Sodium bromide, available from MANAC INCORPORATED]

### <Thickener>

Hydroxyethyl cellulose [HEC Daicel, available from Daicel FineChem Ltd.]

### <Supercooling inhibitor>

Lithium nitrate [Lithium nitrate, available from The Honjo Chemical Corporation]

### <Water>

Drinking tap water

### <Preparation of cold storage material composition>

Regarding the inorganic salt, commercially-available aqueous solutions were used for lithium bromide, lithium chloride, and calcium chloride, respectively, as described earlier. Regarding the crystal nucleating agent and the supercooling inhibitor, respective aqueous solutions were prepared by dissolving the compounds in water at room temperature in advance.

Cold storage material compositions in Examples 1 to 3 and in Comparative Examples 1 to 6 were each prepared by setting a temperature of the aqueous solution of the inorganic salt at 40°C and then mixing the aqueous solution of the inorganic salt and the aqueous solution of the crystal nucleating agent at room temperature.

A cold storage material composition in Example 4 was prepared by setting a temperature of the aqueous solution of the inorganic salt at 40°C and then mixing the aqueous solution of the inorganic salt, the aqueous solution of the crystal nucleating agent at room temperature, and the aqueous solution of the supercooling inhibitor at room temperature.

The thickener was dispersed in the aqueous solution of the crystal nucleating agent at room temperature in advance, and the aqueous solution of the crystal nucleating agent in which aqueous solution the thickener was dispersed was prepared. Next, the aqueous solution of the inorganic salt at 40°C and the aqueous solution (at room temperature) of the crystal nucleating agent in which aqueous solution the thickener was dispersed were mixed to prepare cold storage material compositions in Examples 5 and 7 to 45 and in Comparative Examples 7 and 8.

The thickener was dispersed in the aqueous solution of the crystal nucleating agent at room temperature in advance, and the aqueous solution of the crystal nucleating agent in which aqueous solution the thickener was dispersed was prepared. Next, the aqueous solution of the inorganic salt at 40°C, the aqueous solution of the supercooling inhibitor at room temperature, and the aqueous solution (at room temperature) of the crystal nucleating agent in which aqueous solution the thickener was dispersed were mixed to prepare a cold storage material composition in Example 6.

Note that, in Examples and Comparative Examples, the cold storage material compositions were prepared by adjusting amounts of components contained in a resulting cold storage material composition to amounts shown in Tables 1 to 5, and mixing the components.

Measurements and evaluations in Examples and Comparative Examples were carried out under the following conditions and procedures.

### <Melting temperature>

A cold storage material composition charged in a cryovial made of polypropylene was allowed to stand still, in an ultra-deep freezer [AFZ-1423, available from ADD Co., Ltd] with its temperature controlled to -120°C, for not less than 12 hours so as to solidify the cold storage material composition. The solidified cold storage material composition was allowed to stand still for 1 hour in a thermostatic bath [Ultracold aluminum block thermostatic bath CRYO PORTER (registered trademark) CS-80CP, available from SCINICS CORPORATION] with its temperature controlled to -80°C. Thereafter, temperature increase was carried out at a rate of temperature increase of 0.5°C/min in a temperature range of -80°C to 20°C.

A temperature of the cold storage material composition in the thermostatic bath versus time in the process of increasing the temperature of the thermostatic bath during the above temperature increase was plotted in Fig. 1. As compared with the temperature of the thermostatic bath which is increased at a constant rate, the temperature of the cold storage material composition changed, as shown in Fig. 1, in the order of the following (1) to (3): (1) The temperature of the cold storage material composition increased at a constant rate or a substantially constant rate from -80°C to a certain temperature (regarded as temperature T₁); (2) there was little change from the temperature T₁ to a certain temperature (regarded as temperature T₂) due to latent heat of the cold storage material composition; and (3) the temperature of the cold storage material composition started increasing again after the temperature T₂. The temperature T₁ as used herein is referred to as "melting start temperature", and the temperature T₂ as used herein is referred to as "melting end temperature". A midpoint between the temperature T₁ and the temperature T₂, i.e., temperature T₃, is defined herein as "melting temperature". The melting temperature was evaluated such that the cold storage material composition having a melting temperature of not more than -66.0°C was rated as "G" (Good), and the cold storage material composition having a melting temperature of more than -66.0°C was rated as "P" (Poor).

### <Fixed-temperature retention>

Regarding a temperature change plot of the cold storage material composition, the temperature change plot having been obtained in the process of temperature increase (0.5°C/min) in the ultracold aluminum block thermostatic bath, a temperature keeping property and a duration were evaluated. Next, fixed-temperature retention of the cold storage material composition was evaluated on the basis of results of evaluation of the temperature keeping property and the duration. Specifically, the temperature keeping property and the duration were evaluated such that the cold storage material composition was evaluated as "having fixed-temperature retention" in a case where the cold storage material composition was rated as "G" (Good) or higher for both the temperature keeping property and the duration, i.e., in a case where, due to the action of latent heat of the cold storage material composition, the temperature of the cold storage material composition was maintained, from the melting start temperature T₁ to the melting end temperature T₂, in a range from the melting start temperature T₁ to a temperature less than 2.5°C higher than the melting start temperature T₁, and the duration (i.e., a period of time from the melting start temperature T₁ to the melting end temperature T₂) was 10 minutes or longer. Fixed-temperature retention was evaluated such that the cold storage material composition having fixed-temperature retention was rated as "G" (Good), and the cold storage material composition having no fixed-temperature retention was rated as "P" (Poor). Note that the temperature keeping property and the duration were evaluated in accordance with the following definitions and criteria.

### <Temperature keeping property>

In the temperature change plot of the cold storage material composition, the temperature change plot having been obtained in the process of temperature increase (0.5°C/min) in the ultracold aluminum block thermostatic bath, a temperature difference from the melting start temperature T₁ to the melting end temperature T₂ was measured, so that the temperature keeping property of the cold storage material composition was evaluated on the basis of a result of measurement. The temperature keeping property was evaluated such that the melting end temperature T₂ being not less than 2.5°C higher than the melting start temperature T₁ was evaluated as "P" (Poor), the melting end temperature T₂ being not less than 2.0°C higher than the melting start temperature T₁ and less than 2.5°C higher than the melting start temperature T₁ was evaluated as "G" (Good), and the melting end temperature T₂ being less than 2.0°C higher than the melting start temperature T₁ was evaluated as "E" (Excellent).

### <Duration>

In the temperature change plot of the cold storage material composition, the temperature change plot having been obtained in the process of temperature increase (0.5°C/min) in the ultracold aluminum block thermostatic bath, a period of time from the melting start temperature T₁ to the melting end temperature T₂ was measured, and the period of time was regarded as "duration". The duration was evaluated as follows. In a case where the duration was shorter than 10 minutes, the cold storage material composition was evaluated as "P" (Poor). In a case where the duration was not shorter than 10 minutes and shorter than 16 minutes, the cold storage material composition was evaluated as "G" (Good). In a case where the duration was not shorter than 16 minutes, the cold storage material composition was evaluated as "E" (Excellent).

### <Crystal deposition after solidification-melting cycle (thrice) >

Into a glass container, 300 g of a cold storage material composition was put. The glass container containing the cold storage material composition was allowed to stand still, in an ultra-deep freezer [AFZ-1423, available from ADD Co., Ltd] with its temperature controlled to -120°C, for not less than 12 hours so as to solidify the cold storage material composition. Thereafter, the glass container containing the cold storage material composition was taken out of the ultra-deep freezer and left to stand at room temperature so as to melt the cold storage material composition. These operations of solidifying and melting the cold storage material composition are referred to as "solidification-melting cycle". After the solidification-melting cycle was repeated thrice, a salt deposition state and/or a salt precipitation state in the cold storage material composition in a molten state at room temperature was/were checked. In a case where salt deposition and/or salt precipitation was/were observed, the cold storage material composition was rated as "P" (Poor). In a case where neither salt deposition nor salt precipitation was observed, the cold storage material composition was rated "G" (Good).

### <Supercooling suppressing effect>

A cold storage material composition charged in a cryovial made of polypropylene was allowed to stand still, in an ultra-deep freezer [AFZ-1423, available from ADD Co., Ltd] with its temperature controlled to -110°C, -100°C, or - 90°C, for 12 hours so as to try to solidify the cold storage material composition. The cold storage material composition was taken out of the ultra-deep freezer after 12 hours, and a solidified state of the cold storage material composition was visually checked so as to evaluate a supercooling suppressing effect on the basis of the following criteria: the cold storage material composition that had not been solidified at any of -110°C, -100°C, and -90°C was rated as "P" (Poor); the cold storage material composition that had been solidified at -110°C but had not been solidified at - 100°C or -90°C was rated as "A" (Acceptable); the cold storage material composition that had been solidified at - 110°C and -100°C but had not been solidified at -90°C was rated as "G" (Good); and the cold storage material composition that had been solidified at -110°C, -100°C, and -90°C was rated as "E" (Excellent).

### <Easy handling (low toxicity)>

A chemical substance risk assessment evaluation in accordance with the Industrial Safety and Health Act in Japan was carried out with respect to the cold storage material composition. In the case of chemical risk 5, the cold storage material composition was rated as "P" (Poor). In the case of chemical risk 4, the cold storage material composition was rated as "A" (Acceptable). In the case of chemical risk 3 or lower, the cold storage material composition was rated as "G" (Good).

### <-78°C freezing stability>

-78°C freezing stability of the cold storage material composition was evaluated by the following method in which: (1) a cold storage material composition charged in a cryovial made of polypropylene was placed in a thermostatic bath [Ultracold aluminum block thermostatic bath CRYO PORTER (registered trademark) CS-80CP, available from SCINICS CORPORATION ]; (2) a temperature in the thermostatic bath was lowered from room temperature to -78°C at a temperature decrease rate of 0.5°C/min; (3) the temperature in the thermostatic bath was maintained at -78°C for 1 hour; (4) thereafter, the temperature in the thermostatic bath was increased from -78°C to -30°C at a temperature increase rate of 0.5°C/min; (5) the temperature in the thermostatic bath was lowered from -30°C to -78°C at a temperature decrease rate of 0.5°C/min; (6) the above operations (3) to (5) were repeated 20 times, and a temperature change of the cold storage material composition (for a total of 20 times) in the process of the operation (4) for each repeat was measured; (7) fixed-temperature retention of the cold storage material composition in each of 1 to 20 times of repeat (a total of 20 times) was evaluated on the basis of results of measurement of the temperature change of the cold storage material composition by the method described in the above "Fixed-temperature retention" section; and (8) -78°C freezing stability of the cold storage material composition was evaluated on the basis of the following criteria:
"G" (Good): Fixed-temperature retention of the cold storage material composition was observed in all of 20 evaluations;
"A" (Acceptable): Fixed-temperature retention of the cold storage material composition was observed in a total of 18 to 19 evaluations among the 20 evaluations;
"W" (Warning): Fixed-temperature retention of the cold storage material composition was observed 15 to 17 times among the 20 evaluations; and
"P" (Poor): Fixed-temperature retention of the cold storage material composition was observed 14 times or less among the 20 evaluations.

### <Test results>

Test results are shown in Tables 1 to 5. All of the cold storage material compositions prepared in Examples 1 to 45 contain water, lithium ions, and bromide ions. Furthermore, all of the lithium bromide, the lithium chloride, the sodium chloride, and the sodium bromide that were used in Examples 1 to 45 dissociate in water at room temperature. Moreover, in Examples 1 to 45, none of the compounds were removed from the prepared mixtures. Thus, the amounts of lithium ions, bromide ions, and chloride ions in Examples 1 to 45 are values obtained by theoretical calculation from chemical formulae and used amounts of the lithium bromide used, the lithium chloride used, the sodium chloride used, and the sodium bromide used.

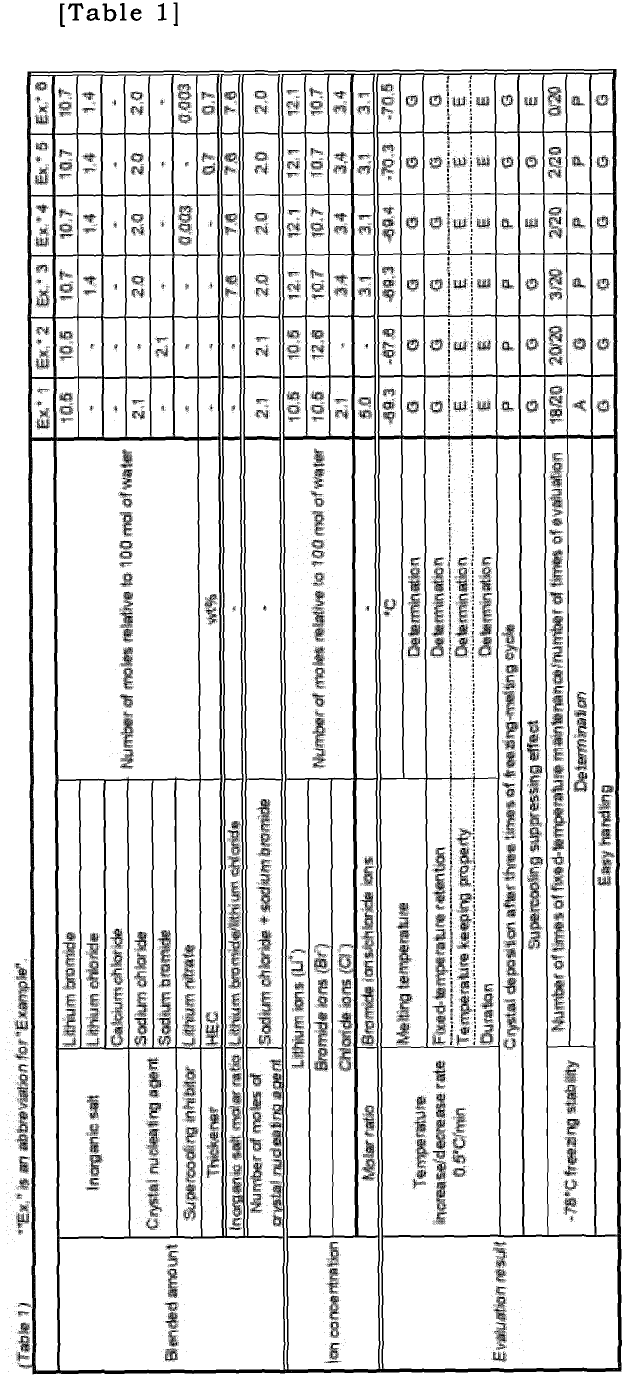

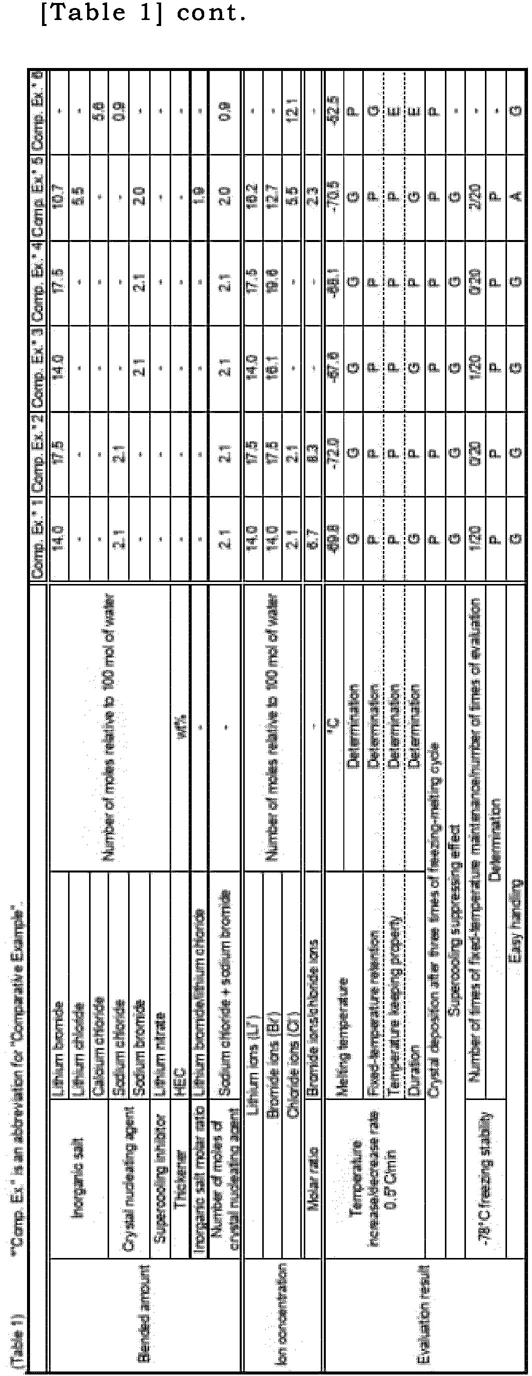

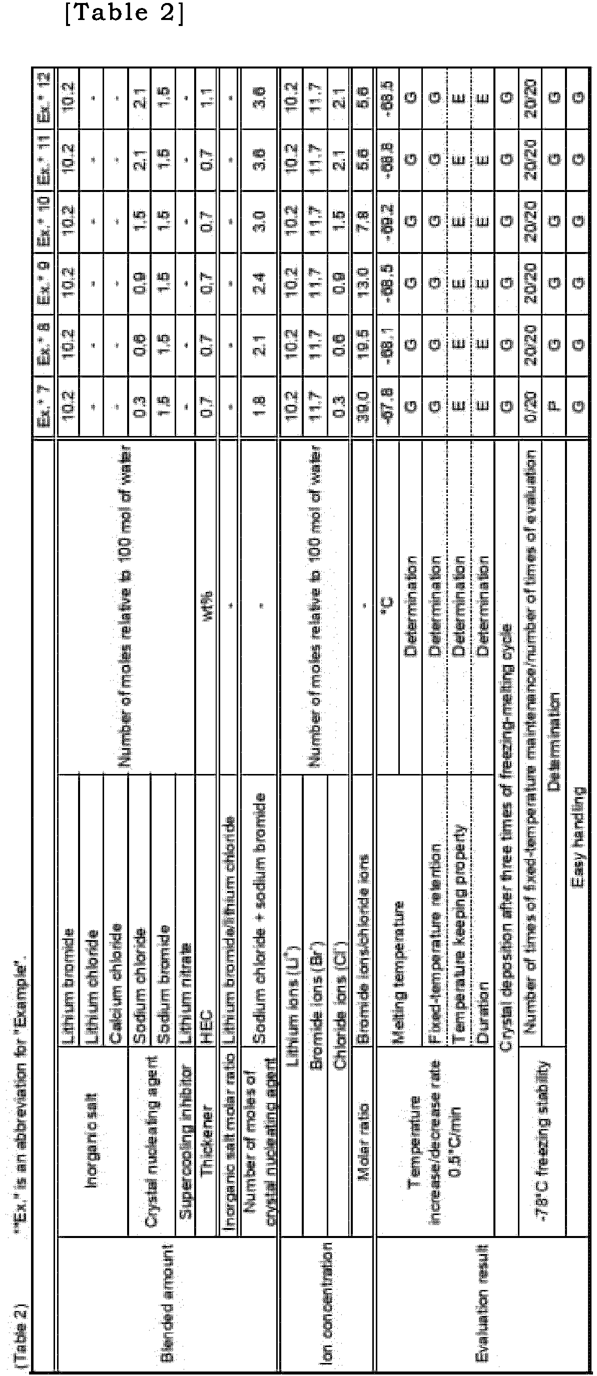

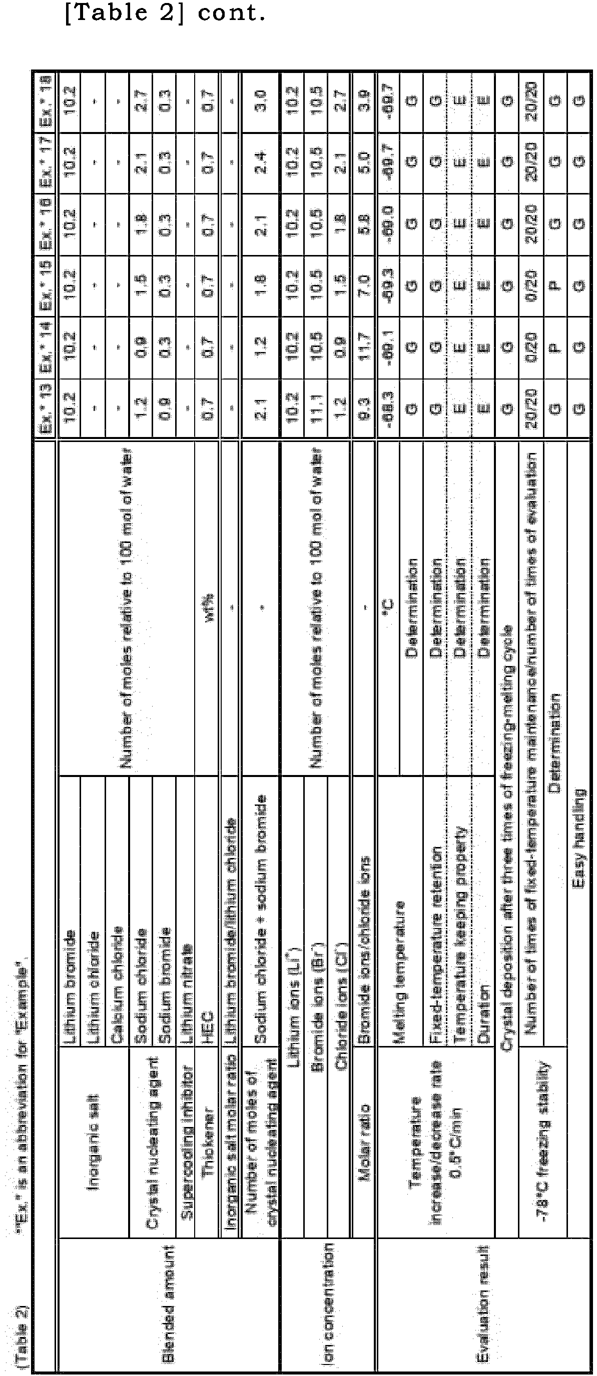

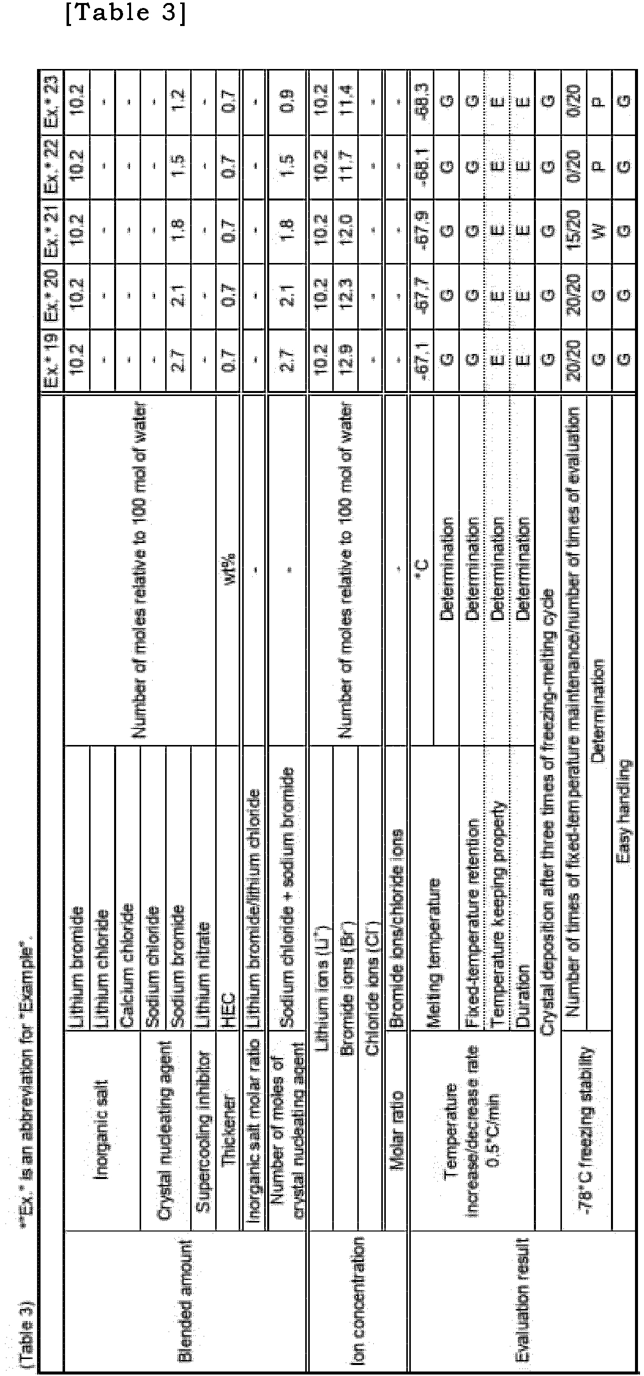

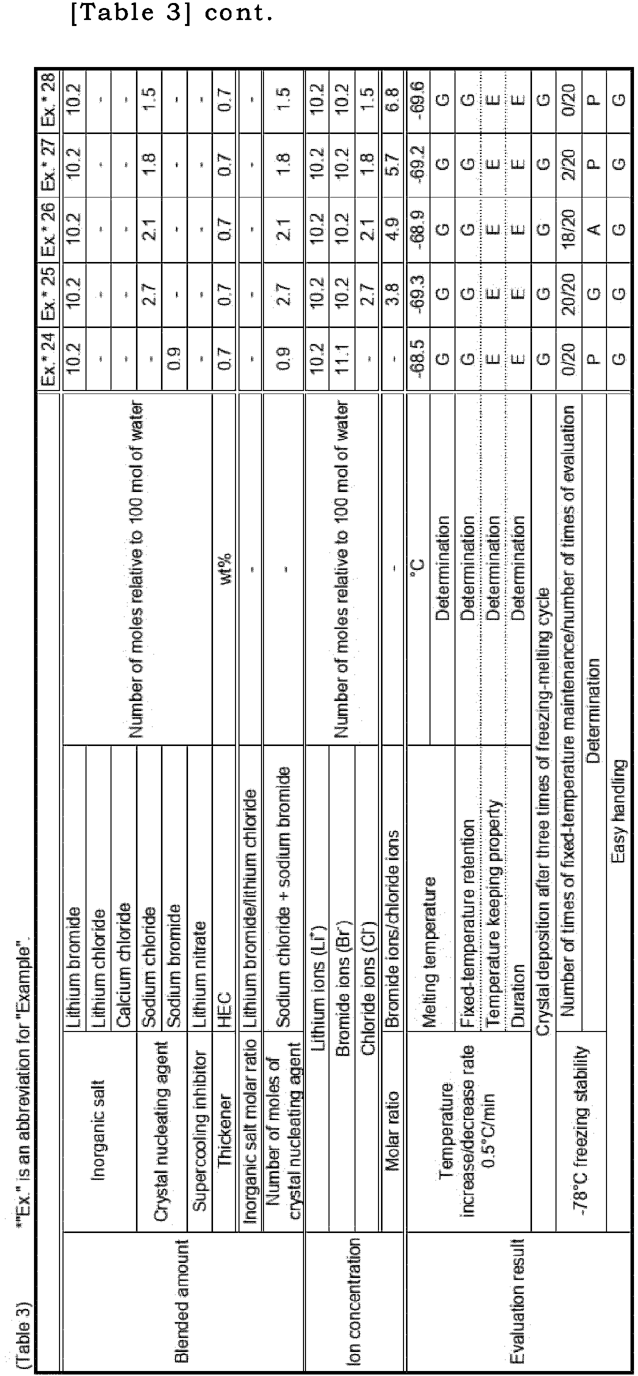

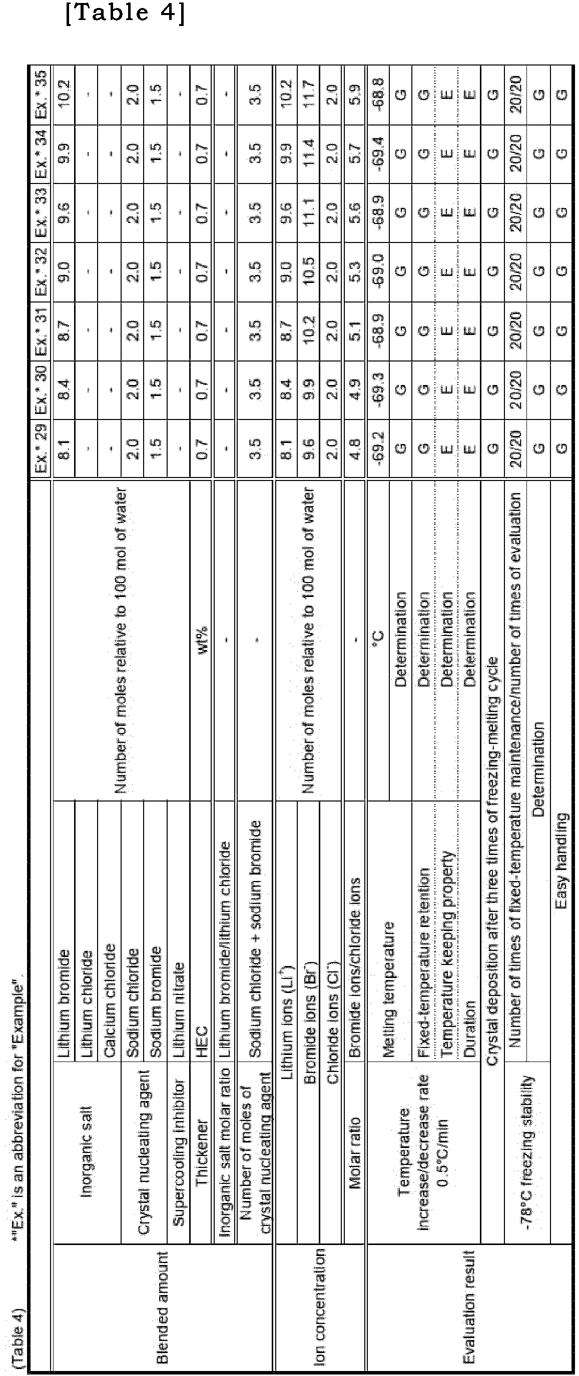

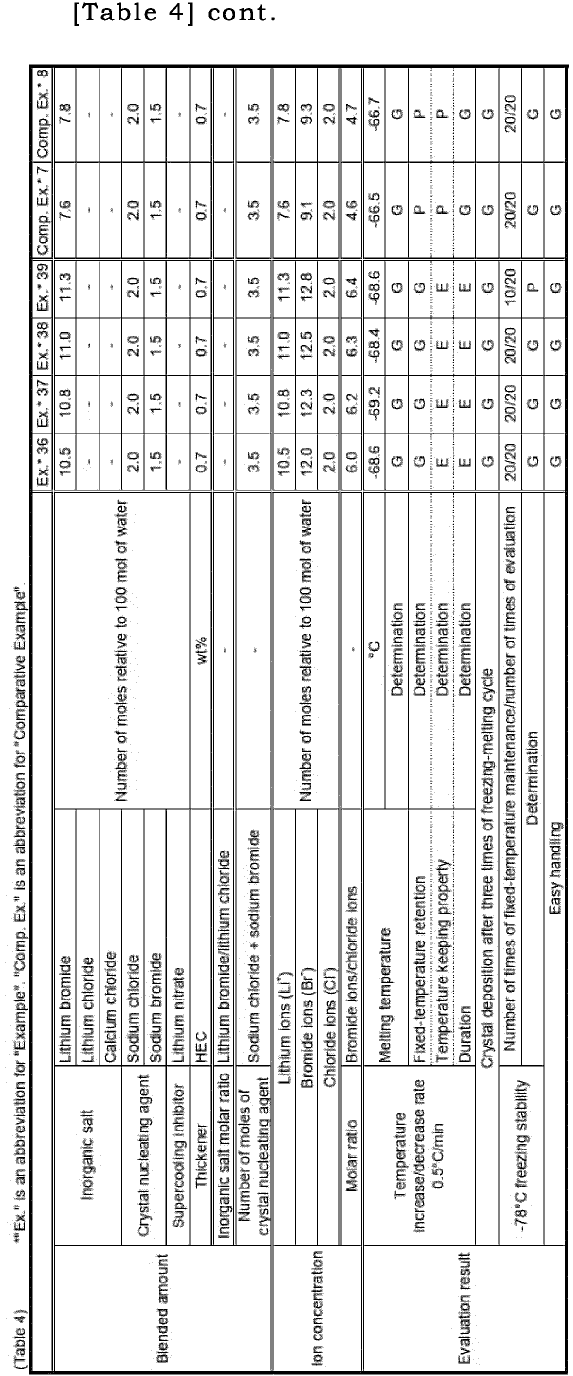

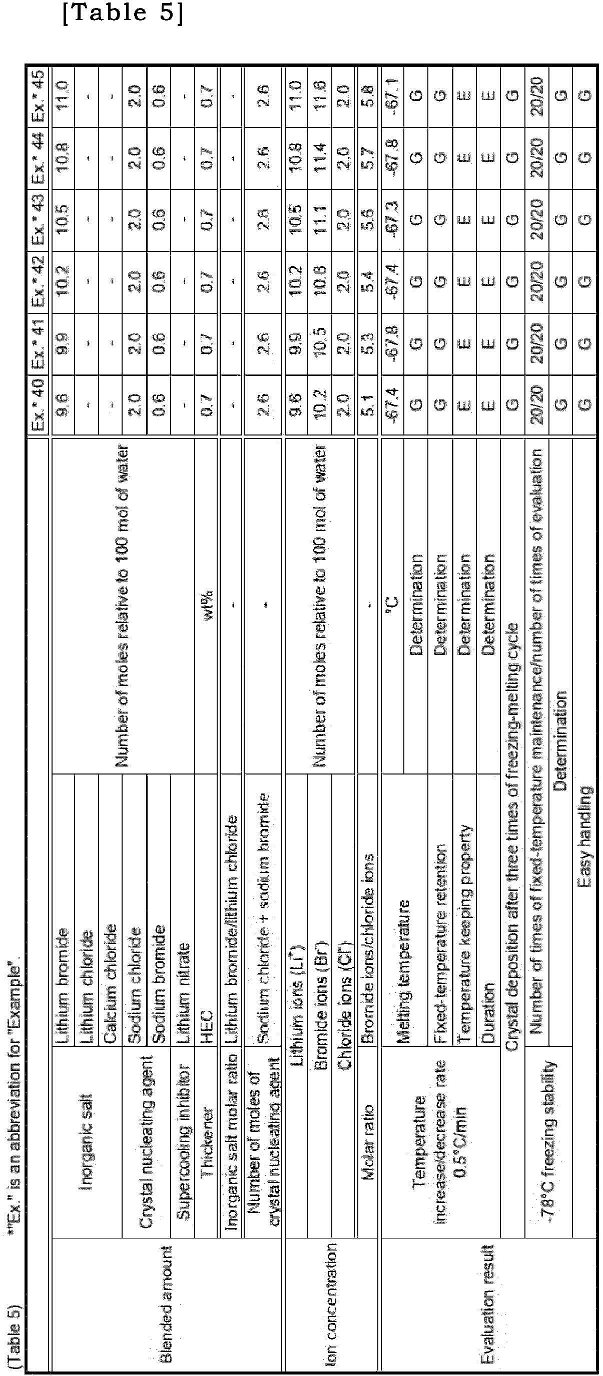

### Industrial Applicability

A cold storage material composition in accordance with an embodiment of the present invention, a cold storage material including the cold storage material composition, a transport container, and a cold storage material composition produced by a method of producing a cold storage material composition in accordance with an embodiment of the present invention each have excellent easy handling and allow a temperature control target article whose control temperature is in a range of -75.0°C to -66.0°C to be stored or transported at a constant temperature for an extended period of time in its control temperature range under a specific environment. Further, a method of using a cold storage material composition in accordance with an embodiment of the present invention allows a temperature control target article whose control temperature is in a range of -75.0°C to -66.0°C to be stored or transported at a constant temperature for an extended period of time in its control temperature range under a specific environment. Thus, an embodiment of the present invention is suitably applicable to storage and transport of articles such as cells, pharmaceutical products, regenerative cells, specimens, food, and the like.

## Claims

1. A cold storage material composition comprising 8.1 mol to 12.6 mol of lithium ions and 7.6 mol to 14.6 mol of bromide ions, relative to 100 mol of water,
the cold storage material composition having a melting temperature in a range of -75.0°C to -66.0°C.

2. The cold storage material composition as set forth in claim 1, further comprising chloride ions.

3. The cold storage material composition as set forth in claim 2, wherein a molar quantity of the bromide ions is greater than a molar quantity of the chloride ions in the cold storage material composition.

4. The cold storage material composition as set forth in claim 2, wherein a molar quantity of the bromide ions is at least 2.5 times greater than a molar quantity of the chloride ions in the cold storage material composition.

5. The cold storage material composition as set forth in claim 1, wherein the cold storage material composition contains 8.1 mol to 11.0 mol of the lithium ions relative to 100 mol of the water.

6. The cold storage material composition as set forth in claim 1, further comprising a crystal nucleating agent.

7. The cold storage material composition as set forth in claim 6, wherein the crystal nucleating agent is contained in an amount of not less than 2.0 mol relative to 100 mol of the water.

8. The cold storage material composition as set forth in claim 1, further comprising a thickener.

9. A cold storage material comprising a cold storage material composition recited in any one of claims 1 to 8.

10. A transport container comprising a cold storage material recited in claim 9.

11. A method of using a cold storage material composition, comprising:
a solidifying step of keeping a cold storage material composition at a temperature lower than a melting temperature of the cold storage material composition to solidify the cold storage material composition, the cold storage material composition containing water, lithium ions, and bromide ions; and
a maintaining step of maintaining part or whole of a target object at -75.0°C to -66.0°C in an environment at a temperature which exceeds the melting temperature of the cold storage material composition,
the cold storage material composition containing 8.1 mol to 12.6 mol of the lithium ions and 7.6 mol to 14.6 mol of the bromide ions, relative to 100 mol of the water.

12. The method as set forth in claim 11, wherein the temperature lower than the melting temperature is not more than -80°C in the solidifying step.

13. The method as set forth in claim 11, wherein the temperature lower than the melting temperature is -85°C to -76°C in the solidifying step.
